# EUROPEAN PATENT APPLICATION

(11) **EP 2 924 392 A1**
(43) Date of publication of application: **30.09.2015**
(21) Application number: 13856554.4
(22) Date of filing: 20.11.2013
(51) Int. Cl.: G01C 21/26, B60R 11/02, G01C 21/36, G08G 1/0968

(54) **INFORMATION PROCESSING DEVICE AND BROWSER CONTROL METHOD**

(30) Priority: 21.11.2012 JP 2012255262
(71) Applicant: Clarion Co., Ltd., Saitama 330-0081 (JP)
(72) Inventor: MARU Mitsunori, Tokyo 100-8280 (JP); MATSUMOTO Takashi, Tokyo 100-8280 (JP); OOHARA Yuuji, Saitama-shi Saitama 330-0081 (JP); NAKASONE Wataru, Saitama-shi Saitama 330-0081 (JP); SEKIGUCHI Takaaki, Tokyo 100-8280 (JP)
(74) Representative: MERH-IP Matias Erny Reichl Hoffmann
(86) International application number: PCT/JP2013/081308
(87) International publication number: WO 2014/080952

(57) **Abstract**

When a browser is displayed on an in-vehicle information processing device, an appropriate display screen is displayed according to a driving state of a vehicle. While moving, web content is processed based on a restriction rule so that a moving image or the like is not reproduced. Further, when an operation of switching a display from another application other than the browser to the browser or an operation of switching a display to another web content on the browser is input to an in-vehicle terminal, the driving state of the vehicle is determined. In a state in which the vehicle stops, web content is displayed without change, and in a state in which the vehicle is moving, when processed web content is being stored, the processed web content is read and displayed, and when processed web content is not being stored, web content is read, processed based on the restriction rule, and then displayed.

## Description

### TECHNICAL FIELD

The present invention relates to an information processing device and a browser control method thereof, and more particularly, to an information processing device and a browser control method thereof which are suitable for securing safety of a user operating a web browser displayed on a car navigation system.

### BACKGROUND ART

In recent years, it has become possible to supply a number of content including a moving image, an image, a sound, a text, and the like to passengers of a vehicle including a driver by means of an in-vehicle terminal represented by a car navigation terminal. A terminal displaying content is not limited to an in-vehicle terminal, and a mobile phone terminal such as a smartphone that is continuously rapidly spread is used. Further, as content, in addition to content stored in an in-vehicle terminal or a mobile phone terminal, various content on the Internet can be used.

Particularly, with the remarkable advance of expressiveness of a mark-up language represented by a Hyper Text Markup Language (HTML) and an HTML-related technique, content used in a vehicle has been increasingly made in a HTML due to an advanced function and easiness of development thereof. A web browser (hereinafter, referred to simply as a "browser") analyzes web content such as a file that is described in a mark-up language such as an HTML or an Extensible Markup Language (XML) and acquired from a server, a script language file described in JavaScript (a registered trademark) or the like, or a style definition file such as Cascading Style Sheets (CSS), and performs a process of arranging a moving image file, an image file, a sound file, or the like acquired in a similar manner based on an analysis result. A processing result is displayed on an in-vehicle terminal or a mobile phone terminal in which a browser is installed.

Meanwhile, in the past, an in-vehicle terminal has a so-called driving restriction function of regulating an operation or display of the in-vehicle terminal while moving such that safety of passengers of a vehicle including a driver is not obstructed. A driving restriction mechanism of a related art is made and installed for each application software such as a car navigation application or a moving image reproduction application installed in an in-vehicle terminal in advance.

An in-vehicle device associated with a driving restriction on a browser is disclosed in Patent Document 1. Patent Document 1 discloses a mechanism in which when content that is described in a mark-up language and displayed on a screen of an in-vehicle terminal is received from a server, for content from which an importance code, blinking display information, or moving image display information is detected, an moving image or a text included in the content is selectively regulated and displayed according to a driving state of a vehicle (claims 1, 2, and 4).

### CITATION LIST

### PATENT DOCUMENT

Patent Document 1: JP 2001-114029 A

### SUMMARY OF THE INVENTION

### PROBLEMS TO BE SOLVED BY THE INVENTION

In the technique of the related art disclosed in Patent Document 1, it is possible to perform a driving restriction by embedding information asking for a driving restriction in content without making a driving restriction mechanism for each application software.

However, it is difficult to apply the technique disclosed in Patent Document 1 to a driving restriction when the user performs an operation of switching a display from an application other than the browser to the browser or an operation of switching a display to another web content by a [back] or [forward] button or switching of a tab on the browser.

In other words, there is a problem in that the display screen of the browser being displayed without application of the driving restriction while stopping is temporarily hidden by the display screen of another application, but then when switching to the browser is performed while the vehicle is moving, the display screen of the browser to which the driving restriction is not applied is displayed even while the vehicle is moving.

As the latest web-related technique, there is a technique in which after web content is read and displayed once, communication is performed between a browser and a server to acquire additional content for partially updating a display of the web content. A representative example of this technique is a function implementable in JavaScript such as XMLHttpRequest or WebSocket that a specification is being developed by World Wide Web Consortium (W3C) or Internet Engineering Task Force (IETF) and that is expected to be increasingly used in a vehicle in the future. According to XMLHttpRequest, even after web content is read and displayed once, it possible to issue a Hypertext Transfer Protocol (HTTP) request to the server at an arbitrary timing and receive additional content. Further, according to WebSocket, in addition to communication from the browser to the server, the server can unilaterally transmit additional content to the browser without a request from the browser.

Such functions frequently update a display and thus should be restricted while the vehicle is moving in order to secure safety of the passenger. However, if the function of JavaScript is simply invalidated at the in-vehicle terminal side, the server does not recognize the driving restriction of the in-vehicle terminal and transmits additional content. Thus, there is a problem in that the additional content received by the in-vehicle terminal is discarded since the function has been invalidated.

The present invention was made in light of the above problems, and it is an object of the present invention to provide an information processing device capable of displaying an appropriate display screen according to a driving state of a vehicle when a browser is displayed on an in-vehicle information processing device.

It is another object of the present invention to provide an information processing device capable of receiving additional content for partially updating a display of web content and reflecting the additional content in an appropriate browser regardless of a driving state of a vehicle when a browser of an in-vehicle information processing device receives the additional content.

### SOLUTIONS TO PROBLEMS

An information processing device according to the present invention such as an in-vehicle terminal is capable of applying a driving restriction even to a display after switching is performed by an operation when the user operates the browser.

In the information processing device according to the present invention, first, when the user performs an operation of switching a display from an application other than a browser installed in an in-vehicle terminal to the browser or an operation of switching a display to another web content on the browser, information related to web content to be displayed after switching is acquired, and it is requested to read web content from a web server or a browser cache. At this time, a driving state of a vehicle is determined, and according to a determination result, web content on which driving restriction processing has not been performed (hereinafter, referred to as "non-processed web content") is read while the vehicle is stopping, and web content on which processing has been performed (hereinafter, referred to as "processed web content") is read and displayed while the vehicle is moving.

Further, even when there is no user operation, if the driving state of the vehicle is changed from "stop" to "move," the processed web content is read and displayed, whereas when the driving state of the vehicle is changed from "move" to "stop," the non-processed web content is read and displayed.

Further, through XMLHttpRequest or WebSocket, after web content is read and displayed once, communication is performed between a server and the browser, and when the in-vehicle terminal receives additional content for partially updating a display of web content, the moving state of the vehicle at the current point in time is determined, and additional content is temporarily stored when the vehicle is moving. When the vehicle stops and the driving restriction are released, the stored additional content is read to update the display. When the in-vehicle terminal receives the additional content and the vehicle is stopping, the additional content is not stored and is read without change to update the display.

According to the present invention, when the user operates the browser, a driving restriction can be applied even to a display after switching is performed by an operation.

Further, even when the restriction is applied while the vehicle is moving, communication is performed between the server and the browser after web content is read and displayed once through the HTML-related technique such as XMLHttpRequest or WebSocket, and thus the in-vehicle terminal can receive the additional content for partially updating the display of the web content.

### EFFECTS OF THE INVENTION

According to the present invention, it is possible to provide an information processing device capable of displaying an appropriate display screen according to a driving state of a vehicle when a browser is displayed on an in-vehicle information processing device.

Further, according to the present invention, it is possible to provide an information processing device capable of receiving additional content for partially updating a display of web content and reflecting the additional content in an appropriate browser regardless of a driving state of a vehicle when a browser of an in-vehicle information processing device receives the additional content.

### BRIEF DESCRIPTION OF THE DRAWINGS

FIG. 1 is a system configuration diagram illustrating an overview of an in-vehicle information communication system according to a first embodiment of the present invention.
FIG. 2 is a hardware configuration diagram of an in-vehicle terminal according to the first embodiment of the present invention.
FIG. 3 is a functional configuration diagram of an in-vehicle terminal according to the first embodiment of the present invention.
FIG. 4 is a diagram illustrating a data format of a restriction rule 244.
FIG. 5 is a configuration diagram of an existing browser according to a related art.
FIG. 6 is a configuration diagram of a browser 220 according to the first embodiment of the present invention.
FIG. 7 is a diagram illustrating an example of a web content storage information table (1/3).
FIG. 8 is a flowchart illustrating processing of a regulating unit 300 of a browser 220.
FIG. 9 is a diagram illustrating of an example of a web content storage information table (2/3).
FIG. 10 is a diagram illustrating of an example of a web content storage information table (3/3).
FIG. 11 is a flowchart illustrating processing of a regulating unit 300 of a browser 220 when only non-processed web content is held.
FIG. 12 is a flowchart illustrating processing of a regulating unit 300 of a browser 220 when no web content is held.
FIG. 13 is a diagram illustrating screens of a navigation and a browser 220 displayed and provided by an in-vehicle information communication system.
FIG. 14 is a configuration diagram of a browser 220a according to a second embodiment of the present invention.
FIG. 15 is a flowchart illustrating processing of a regulating unit 300a of a browser 220a according to the second embodiment of the present invention.
FIG. 16 is a configuration diagram of a browser 220b according to a third embodiment of the present invention.
FIG. 17 is a flowchart illustrating processing of a regulating unit 300b of a browser 220b according to the third embodiment of the present invention.
FIG. 18 is a system configuration diagram illustrating a system overview of an in-vehicle information communication system according to a fourth embodiment of the present invention.
FIG. 19 is a hardware configuration diagram of an in-vehicle terminal according to the fourth embodiment of the present invention.
FIG. 20 is a system configuration diagram illustrating a system overview of an in-vehicle information communication system according to a fifth embodiment of the present invention.
FIG. 21 is a hardware configuration diagram of a mobile phone terminal 20a according to the fifth embodiment of the present invention.
FIG. 22 is a functional configuration diagram of an in-vehicle terminal according to the fifth embodiment of the present invention.
FIG. 23 is a configuration diagram of a browser 420 according to the fifth embodiment of the present invention.
FIG. 24 is a system configuration diagram illustrating a system overview of an in-vehicle information communication system according to a sixth embodiment of the present invention.
FIG. 25 is a configuration diagram of a mobile phone terminal 20b according to the sixth embodiment of the present invention.
FIG. 26 is a configuration diagram of a mobile phone terminal 20c according to a seventh embodiment of the present invention.

### MODE FOR CARRYING OUT THE INVENTION

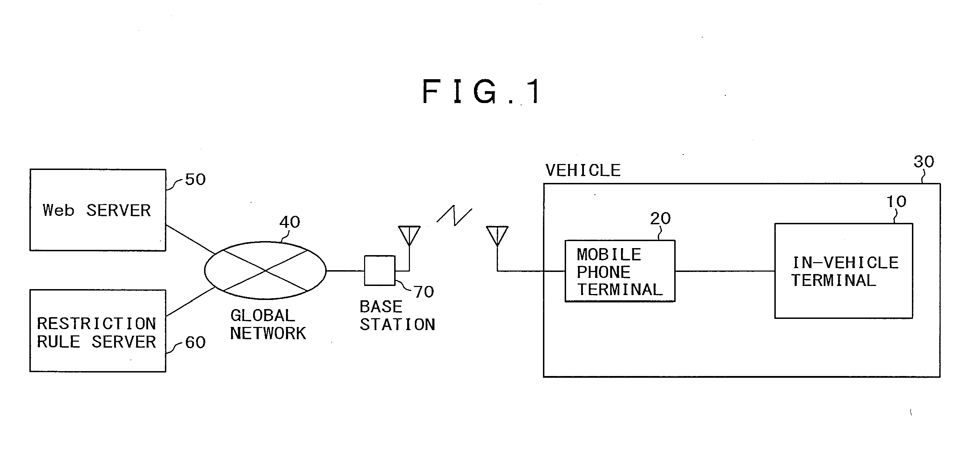

Hereinafter, embodiments of the present invention will be described with reference to FIGS. 1 to 26.

### [First embodiment]

A first embodiment of the present invention will be described below with reference to FIGS. 1 to 12.

First, an in-vehicle information communication system according to the first embodiment of the present invention will be described with reference to FIGS. 1 to 3.

FIG. 1 is a system configuration diagram illustrating a system overview of the in-vehicle information communication system according to the first embodiment of the present invention.

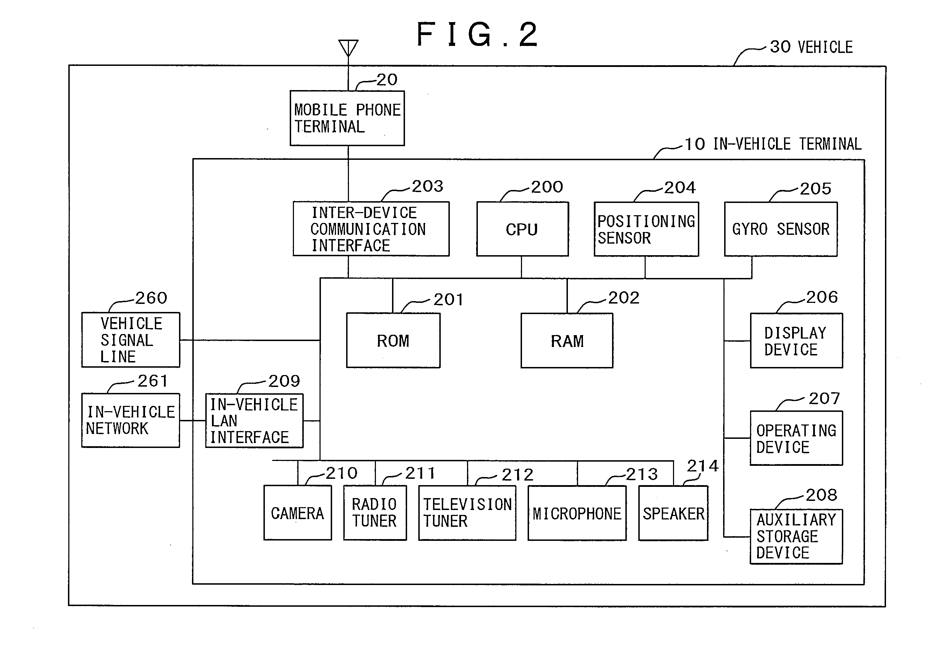

FIG. 2 is a hardware configuration diagram an in-vehicle terminal according to the first embodiment of the present invention.

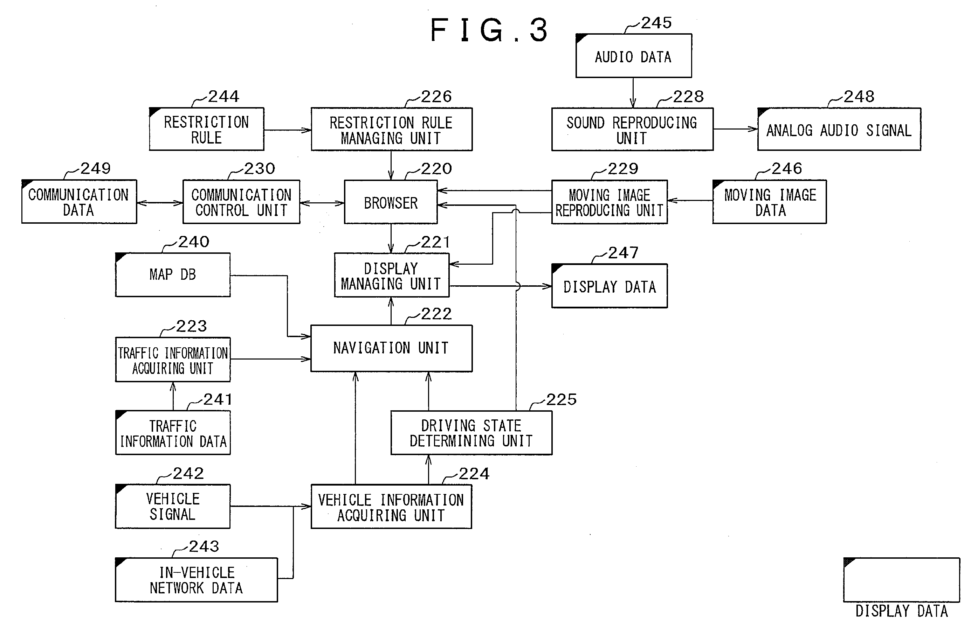

FIG. 3 is a functional configuration diagram of the in-vehicle terminal according to the first embodiment of the present invention.

The in-vehicle information communication system according to the first embodiment of the present invention is a system that provides various content on the Internet to passengers of a vehicle, and configured to include a vehicle 30 including an in-vehicle terminal 10 and a mobile phone terminal 20, and a web server 50 and a restriction rule server 60 which are connected with a base station 70 via a global network 40.

In the present embodiment, the in-vehicle terminal 10 does not have a function of performing communication directly with the Internet, and thus performs communication with the web server 50 or the restriction rule server 60 connected via the global network 40 by means of wireless communication between the mobile phone terminal 20 and the base station 70. The web server 50 is a server that delivers content on the Internet. The restriction rule server 60 is a server that delivers a restriction rule (the details will be described later) for applying a driving restriction when content is displayed on a screen of the in-vehicle terminal 10.

In the above description, the restriction rule server is assumed to deliver the restriction rule, but in a system configuration including no restriction rule server, web content may be processed using a default restriction rule stored in the in-vehicle terminal in advance.

Further, the mobile phone terminal 20 may be a wireless communication terminal having no telephone function as long as the wireless communication terminal is connected to the in-vehicle terminal 10 and the Internet and can perform communication.

When the passenger uses content on the Internet, the in-vehicle terminal 10 issues a content request, and performs wireless communication with the base station 70 using the communication function of the mobile phone terminal 20. The base station 70 is radio equipment that relays the global network 40 via the wireless communication of the mobile phone terminal 20.

Then, the base station 70 transmits the request from the mobile phone terminal 20 to the web server 50 connected to the global network 40. The web server 50 transmits content according to the request to the mobile phone terminal 20 as a response. The in-vehicle terminal 10 performs communication with the mobile phone terminal 20, and receives the content.

Here, the global network 40 is a global communication network such as a telephone network or the Internet.

Next, a hardware configuration of the in-vehicle terminal 10 will be described with reference to FIG. 2. As illustrated in FIG. 2, the in-vehicle terminal 10 includes a central processing unit (CPU) 200, a read only memory (ROM) 201, a random access memory (RAM) 202, an inter-device communication interface 203, a positioning sensor 204, a gyro sensor 205, a display device 206, an operating device 207, an auxiliary storage device 208, an in-vehicle LAN interface 209, a camera 210, a radio tuner 211, a television tuner 212, a microphone 213, and a speaker 214 as hardware.

The CPU 200 is an operation control unit that controls the respective units of the in-vehicle terminal 10 and executes car navigation application software or a browser program loaded onto the RAM 202.

The ROM 201 is a read only storage device in which a control program and the like are written.

The RAM 202 is a storage device that loads a program stored in the auxiliary storage device 208 and temporarily stores the program or stores work data.

The inter-device communication interface unit 204 is an interface device that is connected with the mobile phone terminal 20 and exchanges data with the mobile phone terminal 20. A connection scheme may be a wired connection conforming to a standard such as Universal Serial Bus (USB) or High-Definition Multimedia Interface (HDMI) (a registered trademark) or a wireless connection conforming to a standard such as IEEE 802.11a/b/g/n of a wireless Local Area Network (LAN) or Bluetooth (a registered trademark).

The positioning sensor 204 is a sensor that measures its own position indicated by a latitude and a longitude on the earth.

The gyro sensor 205 is a sensor that measures an angle and angular velocity of the vehicle.

The display device 206 is a device that displays image information for the passenger such as a liquid crystal display (LCD) or an organic electro-luminescence (EL) display.

The operating device 207 is a device used when the passenger operates the in-vehicle terminal 10 with his/her finger such as a button, a switch, a keyboard, or a touch panel.

The auxiliary storage device 208 is a large-capacity storage device that stores various kinds of data such as a map DB 240, a restriction rule 244, audio data 245, and moving image data 246 illustrated in FIG. 3 as well, car navigation application software, and a browser program, such as a Hard Disk Drive (HDD) or a Solid State Drive (SSD). Further, when information is old, and it is necessary to update the information, the in-vehicle terminal 10 can update the information by accessing the global network 40 via the inter-device communication interface 203 and the mobile phone terminal 20 and acquiring various kinds of data such as the map DB 240, the restriction rule 244, the audio data 245, the moving image data 246 stored in the storage device or the like from the server connected with the global network 40. Further, software such as the browser can be updated to the latest version from the server.

The in-vehicle LAN interface 209 is a device that is connected with an in-vehicle network 261, and fetches data indicating the driving state or the internal state of the vehicle 30 from the in-vehicle network 261 into the inside thereof.

The in-vehicle terminal 10 is connected with the vehicle signal line 260 as well, and can acquire the driving state or the internal state of the vehicle 30.

The camera 210 is an optical device that photographs an external environment of the vehicle 30 and acquires an image.

The radio tuner 211 is a device that receives a radio wave of a short wave, a middle wave, or an ultrashort wave through an antenna, and is used to select a song and listen to a program. Particularly, the radio tuner 211 can receive traffic information from a vehicle information and communication system (VICS) (a registered trademark) as reception of FM multiplex broadcasting.

The television tuner 212 is a device that receives a radio wave of an ultrashort wave, selects a song, and reproduces a moving image as a television program.

The microphone 213 is a device that collects a voice of the passenger.

The speaker 214 is a device that outputs music information, voice guidance at the time of path guidance, an operation sound, or the like from a browser 220, a sound reproducing unit 228, or a moving image reproducing unit 229.

Next, a software configuration of the in-vehicle terminal 10 will be described with reference to FIG. 3. Software of the in-vehicle terminal 10 according to the first embodiment of the present invention is mainly a group of components for performing car navigation and web browsing, and includes the browser 220, a display managing unit 221, a navigation unit 222, a traffic information acquiring unit 223, a vehicle information acquiring unit 224, a driving state determining unit 225, a restriction rule managing unit 226, the sound reproducing unit 228, the moving image reproducing unit 229, and a communication control unit 230 as illustrated in FIG. 3.

The respective components are installed as a computer program, particularly, an application program operating on an operating system (OS), stored in the ROM 201 or the auxiliary storage device 208, loaded onto the RAM 202, and analyzed and executed as a program by the CPU 200.

Further, data dealt by the in-vehicle terminal 10 according to the first embodiment of the present invention includes the map DB 240, traffic information data 241, a vehicle signal 242, in-vehicle network data 243, the restriction rule 244, the audio data 245, the moving image data 246, display data 247, an analog audio signal 248, and communication data 249.

The browser 220 analyzes a file that is described in a mark-up language such as the HTML or the XML and acquired from the web server 50, a script language file described in JavaScript or the like, a style definition file such as a CSS, or the like, and performs a process of arranging a moving image file, an image file, a sound file, or the like acquired in a similar manner based on an analysis result. Then, as a processing result, the display data 247 is displayed on the display device 206 through the display managing unit 221, or audio information is output from the speaker 214.

The display managing unit 221 performs control such that information displayed on the display device 206 is switched. For example, the display managing unit 221 performs control for switching a display when the passenger operates the operating device 207 or controls a display of each application such as the browser 220, the navigation unit 222, or the moving image reproducing unit 229 operating on the in-vehicle terminal 10.

The navigation unit 222 performs path guidance from a departure place to a destination designated by the driver based on the position of the vehicle 30. For example, the navigation unit 222 estimates the position of the vehicle 30 based on positioning information indicating the position of its own device acquired from the positioning sensor 204 and the gyro sensor 205, velocity information acquired from the vehicle information acquiring unit 224, and the like, compares the estimated position of the vehicle 30 with information indicated by the map DB 240, corrects an error, and specifies the position of the vehicle 30. Then, the navigation unit 222 offers the path guidance to the destination to the driver based on the current position of the vehicle 30 using a sound output from the speaker 214 or an image displayed on the display device 206.

The traffic information acquiring unit 223 acquires, for example, traffic jam information, accident information, and construction information acquired from the VICS as the traffic information data 241.

The vehicle information acquiring unit 224 is a portion that acquires data from the in-vehicle network 261 of the vehicle 30 and the vehicle signal line 260, and acquires information related to moving of the vehicle 30 such as velocity information, acceleration information, brake operation information, handle steering information, and fuel consumption information, and causes necessary information to be displayed on an operation panel or uses the information for the display of the navigation unit 222.

The driving state determining unit 225 determines whether or not the vehicle is moving, for example, based on the velocity information and the brake operation information acquired by the vehicle information acquiring unit 224. The determination result information is used in the navigation unit 222 or the browser 220.

The restriction rule managing unit 226 manages the restriction rule 244 for the moving restriction when web content acquired from the web server 50 is displayed. The restriction rule managing unit 226 reads the restriction rule 244 according to an instruction given from the browser 220 or notifies the browser 220 of the fact that the restriction rule 244 has been updated.

The sound reproducing unit 228 acquires the audio data 245 or acquires audio information from the radio tuner 211, decodes the audio information, and outputs the decoded information to the speaker 214 or a headphone (not illustrated) as an analog audio signal.

The moving image reproducing unit 229 acquires the moving image data 246 or acquires moving image information from the television tuner 212, decodes the moving image information, causes the decoded information to be displayed on the display device 206 as a moving image through the display managing unit 221, and causes the sound to be output from the speaker 214.

The communication control unit 230 performs processing of a communication protocol such as a Transmission Control Protocol/Internet Protocol (TCP/IP), receives information from another terminal or server as the communication data 249, acquires information from the browser 220 or the like, generates information according to a communication protocol designated by another terminal or server, and transmits the generated information as the communication data 249.

The map DB 240 includes map information configured with address information, read information, building information such as a gas station or a school, and the like and map-related information, for example, traffic restriction information such as a speed limit, and is used for the path guidance by the navigation unit 222. The map DB 240 may be stored in the auxiliary storage device 208 and may be downloaded from an external server connected to the global network 40 as necessary.

The traffic information data 241 includes the traffic jam information, the accident information, the construction information, and the like which are acquired from the traffic information system such as the VICS. Since the traffic information changes from moment to moment, accumulated data cannot be continuously used. The traffic information data 241 is used for the path guidance by the navigation unit 222 or notification of the traffic information to the driver.

The vehicle signal 242 and the in-vehicle network data 243 are data acquired from the vehicle signal line 242 and the in-vehicle network 221, respectively, and include information related to moving of the vehicle 30 such as the velocity information, the acceleration information, the brake operation information, the handle steering information, and the fuel consumption information. A difference with the vehicle signal 242 is that the in-vehicle network data 243 is digital data.

The restriction rule 244 is a processing rule for securing safety of the passenger even when the web content is displayed while moving. The restriction rule 244 will be described later in detail.

The audio data 245 is data that is acquired from the microphone 213 or included in the moving image data, and is converted into the analog audio signal 248 through the sound reproducing unit 228.

The analog audio signal 248 is an analog signal obtained by converting the audio data 245 through the sound reproducing unit 228, and is input to the speaker 214 or the headphone (not illustrated) and output to a listener as a sound.

The moving image data 246 is source data input to the moving image reproducing unit 229 for moving image reproduction such as Moving Picture Experts Group (MPEG) data.

The communication data 249 is data transceived by the communication control unit 230.

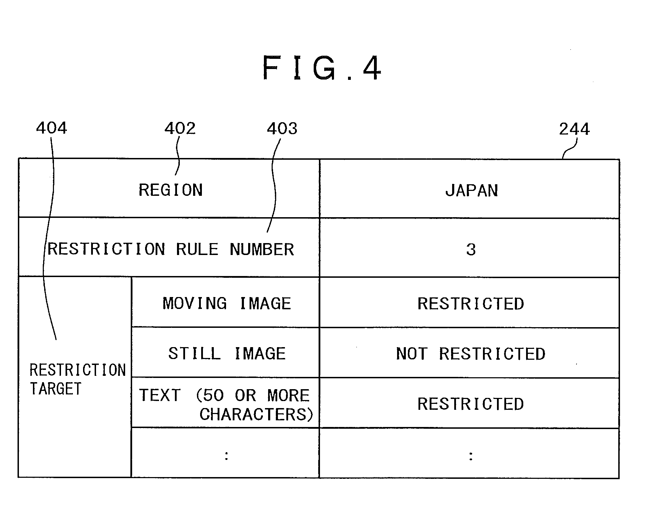

Next, a data format of the restriction rule 244 will be described with reference to FIG. 4.

FIG. 4 is a diagram illustrating the data format of the restriction rule 244.

The restriction rule 244 is a rule set for driving restriction when web content is displayed, and used for processing for securing safety of the passenger even when web content is displayed while moving.

The restriction rule 244 includes a region 402, a restriction rule number 403, and a restriction target 404 as illustrated in FIG. 4.

The region 402 is an entry indicating a geographical range to which the restriction rule 244 is applicable. The range of the region 402 may be a range including one or more countries or may be a range narrower than a country such as a state or a province.

The restriction rule number 403 is an entry that is used to apply the different restriction rules 244 within the same region and stores a number indicating a type of the restriction rule 244.

The restriction target 404 is an entry indicating whether or not it is necessary to apply a restriction for each content included in web content.

Here, in the restriction rule 244 illustrated in FIG. 4, the region 402 is "Japan," the restriction rule number 403 is "3," and the restriction target 404 is one in which a "moving image" is set to "restricted," a "still image" is set to "non restricted," and a "text (50 or more characters)" is set to "restricted." In the restriction target 404, for content set to "non restricted," processing of web content is unnecessary, but for content set to "restricted," processing of causing the content not to be displayed or causing the content to be displayed in black is performed.

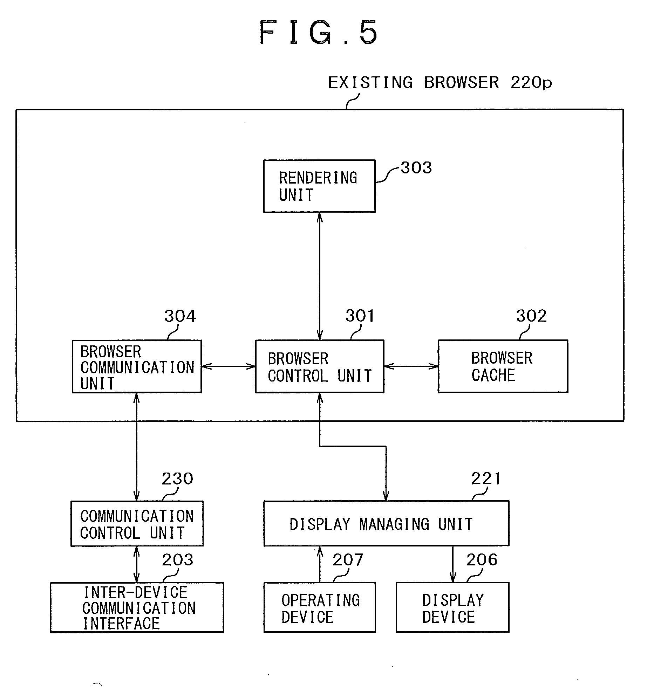

Here, before the browser 220 of the present embodiment is described, first, a configuration of an existing browser 220p serving as a browser of a related art will be described with reference to FIG. 5.

FIG. 5 is a configuration diagram of an existing browser according to the related art.

The existing browser 220p includes a browser control unit 301, a browser cache 302, a rendering unit 303, and a browser communication unit 304 as illustrated in FIG. 5.

Here, the existing browser 220p may be a tabbed browser. The tabbed browser is a browser capable of displaying a plurality of web pages on a single window as a display material that is called a tab and added to a web page is selected by a user operation, and is the mainstream of a recent browser. In this case, it is unnecessary to manage a plurality of windows, memory resources are saved, and operability of the user is considered to be improved.

The browser communication unit 304 is a component that performs communication with the outside through the communication control unit 230 and the inter-device communication interface 203 of the in-vehicle terminal 10, and transmits a content request or receives content as a response.

The rendering unit 303 analyzes the acquired content, and performs a process (a rendering process) of arranging display elements such as a moving image file, an image file, and a sound file based on the analysis result. A processing result is transmitted to the display managing unit 221 via the browser control unit 301. Further, when the user performs, for example, an operation of selecting a hyperlink included in web content, the rendering unit 303 determines a Uniform Resource Locator (URL) of web content to be displayed, and generates a web content request.

The browser cache 302 holds some files such as a HTML file, an XML file, a JavaScript file, a CSS file, a moving image file, an image file, and a sound file included in content acquired from the web server 50 as a cache. The browser can use the files held in the browser cache 302 even offline.

The browser control unit 301 controls processing of the browser communication unit 304, the rendering unit 303, and the browser cache 302, and exchanges operation information and screen information with the display managing unit 221 of the in-vehicle terminal 10.

Processing when the existing browser 220p is actually operated will be described.

For example, when the user operates the operating device 207 to perform an operation of reading another web content, for example, when the user selects a hyperlink included in web content, first, the browser control unit 301 acquires the operation information through the display managing unit 221 of the in-vehicle terminal 10. The acquired operation information is transmitted to the rendering unit 303. Then, the rendering unit 303 determines the web content to be read according to the user's operation, generates the web content request, and transmits the web content request to the browser control unit 301.

The browser control unit 301 determines whether or not the web content to be read is being stored in the browser cache 302 based on the request received from the rendering unit 303. When the web content to be read is being stored in the browser cache 302, the web content is read from the browser cache 302 and transmitted to the rendering unit 303. When the web content to be read is not being stored in the browser cache 302, the web content request generated by the rendering unit 303 is transmitted to the web server 50 via the browser communication unit 304. When the browser communication unit 304 receives the web content, the web content is transmitted to the rendering unit 303 via the browser control unit 301.

The rendering unit 303 analyzes the acquired web content, and performs a process of arranging a moving image file, an image file, a sound file, or the like based on the analysis result. Then, the browser control unit 301 transmits a processing result to the display managing unit 221 of the in-vehicle terminal 10, and the display device 206 displays the processing result.

Further, for example, when an operation of switching an application from the existing browser 220p to another application or from another application to the existing browser 220p is performed while another application such as the car navigation application or the moving image reproduction application is being operated in addition to the existing browser 220p in the in-vehicle terminal 10, the operation information by the user is transferred from the operating device 207 of the in-vehicle terminal 10 to the display managing unit 221, and the display managing unit 221 performs control such that switching to a display of an application to be displayed is performed regardless of processing of the existing browser 220p, and the result is displayed on the display device 206.

Further, for example, when an operation of switching a display to another web content such as "back" or "forward" of the existing browser 220p is performed or when a plurality of pages are opened on a single window and switched by a tab operation, the operation information by the user is transferred from the operating devices 207 of a plurality of in-vehicle terminals 10 to the display managing unit 221, and the browser control unit 301 acquires the operation information from the display managing unit 221. The browser control unit 301 selects screen information of web content to be displayed as a result of the switching operation by the user from a main storage device, transmits the selected screen information to the display managing unit 221, and causes the screen information to be displayed on the display device 206.

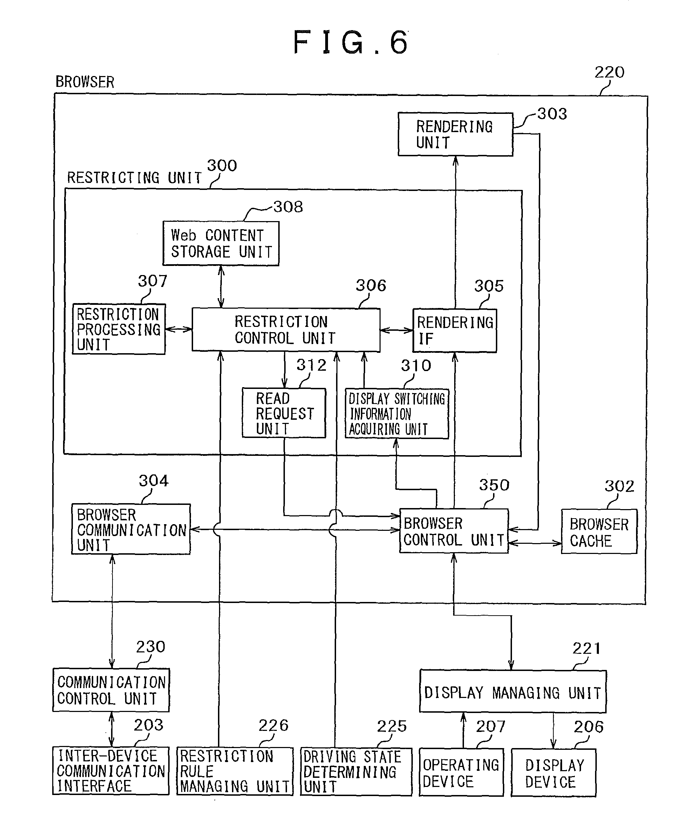

Next, a configuration of the browser 220 according to the first embodiment of the present invention will be described with reference to FIG. 6 based on the configuration of the browser 220p according to the related art.

FIG. 6 is a configuration diagram of the browser 220 according to the first embodiment of the present invention.

The browser 220 according to the present embodiment includes a browser control unit 350, the browser cache 302, a rendering unit 303, a browser communication unit 304, and a regulating unit 300 as illustrated in FIG. 6.

When the user performs an operation of switching a display to another web content on the browser 220, for example, when the user performs an operation of switching a display from another application software to the browser 220 or an operation of switching a display to another web content such as "back" or "forward" or when a plurality of pages are opened on a single window and switched by a tab operation, the browser control unit 350 transfers information related to web content to be displayed after switching to the regulating unit 300. Further, when there is a web content re-read request (reload, a display screen update request) from the regulating unit 300, web content currently being displayed is read from the web server 50 or the browser cache 302.

The browser cache 302, the rendering unit 303, and the browser communication unit 304 are the same as the components of the related art illustrated in FIG. 5.

The regulating unit 300 applies or release the driving restriction based on the restriction rule 244 according to the user's operation or the driving state of the vehicle when web content is displayed on the screen of the in-vehicle terminal 10. The regulating unit 300 includes a rendering IF 305, a restriction control unit 306, a restriction processing unit 307, a web content storage unit 308, a display switching information acquiring unit 310, and a read request unit 312.

The rendering IF 305 is a portion undertaking an interface between the browser control unit 350 and the rendering unit 303.

If information acquired from the browser control unit 350 is an inquiry about a process corresponding to an operation when the user performs an operation of selecting a hyperlink included in web content, the information is transmitted directly to the rendering unit 303.

When the information acquired from the browser control unit 350 is content read from the web server 50 or the browser cache 302, it is determined whether or not it is necessary to apply the restriction, and content to which it is necessary to apply the restriction is transmitted to the restriction control unit 306 to be subject to the driving restriction processing, and content to which it is unnecessary to apply the restriction is transmitted to the rendering unit 303 without change.

Further, when non-processed web content and processed web content which will be described later are acquired from the restriction control unit 306, the non-processed web content and the processed web content are transferred to the rendering unit 303 without change.

When the user performs an operation of switching a display from another application to the browser 220 or an operation of switching a display of web content such as "back" or "forward," the display switching information acquiring unit 310 acquires information related to web content to be displayed from the browser control unit 350, and transmits the acquired information to the restriction control unit 306.

The restriction processing unit 307 processes web content to which it is necessary to apply the driving restriction based on the restriction rule 244 acquired from the restriction rule managing unit 226 of the in-vehicle terminal 10 so that safety is secured even when the web content is displayed while moving.

The web content storage unit 308 holds the processed web content that has been subject to the driving restriction processing and non-processed web content.

When the user performs an operation of switching a display from another application to the browser 220 or an operation of switching a display of web content such as "back" or "forward," but web content to be displayed is not being held in the web content storage unit 308, the read request unit 312 requests the browser control unit 350 to read web content to be displayed from the web server 50 or the browser cache 302.

The restriction control unit 306 causes the restriction processing unit 307 to process the content acquired from the rendering IF 305 according to the driving state of the vehicle acquired from the driving state determining unit 225 of the in-vehicle terminal 10, or causes the non-processed web content and the processed web content to be stored in the web content storage unit 308. Further, the restriction control unit 306 acquires information related to web content to be displayed by the user's operation from the display switching information acquiring unit 310, determines whether or not the web content is being stored in the web content storage unit 308, reads the web content when the web content is determined to be being stored in the web content storage unit 308, transmits the read web content to the rendering IF 305, and requests the browser control unit 350 to read the web content again through the read request unit 312 when the web content is determined to be not being stored in the web content storage unit 308.

The number of web content simultaneously being operated on the browser may be one, and a plurality of web content may be simultaneously operated, and web content being operated may be selected by the user selecting the tab and displayed.

The number of browser regulating units 300 and the number of rendering units 303 according to the present embodiment have been described to be one, but a plurality of browser regulating units 300 and a plurality of number of rendering units 303 may be provided according to the number of web content being operated, for example, for each display page of each tab, and the browser control unit may be configured to manage the plurality of regulating units and the plurality of rendering units.

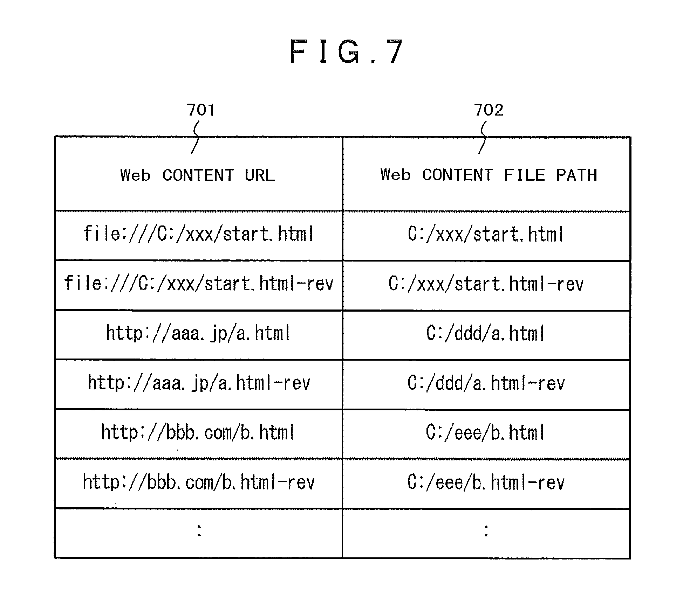

Next, a web content storage information table will be described with reference to FIG. 7. FIG. 7 is a diagram illustrating an example of the web content storage information table (1/3).

In the present embodiment, the web content storage unit 308 stores non-processed web content and processed web content that has been subject to the driving restriction processing by the restriction processing unit 307 of the regulating unit 300 in the browser 220 at positions of file paths indicated by the web content storage information table.

As illustrated in FIG. 7, each record of the web content storage information table according to the present embodiment includes a web content URL 701 and a web content file path 702.

The web content URL 701 stores a URL set as an index used to search for web content displayed when the user's operation is performed, or the driving state is changed. An index used to search for web content may not be a URL if stored web content can be searched easily and uniquely.

Here, different URLs are set to the non-processed web content and the processed web content as the web content URL 701, a URL on the Internet is used without change for non-processed web content, but "-rev" is added to the end of a URL on the Internet to distinguish processed web content.

The web content file path 702 indicates a storage location in a file system of a file body of non-processed web content and processed web content in the storage device of the in-vehicle terminal 10.

In the example of FIG. 7, for first web content, the web content URL 701 is "file:///C:/xxx/start.html," and the web content file path 702 is "C:/xxx/start.html."

Further, second web content is content obtained by performing the restriction processing on the first web content, the web content URL 701 is "file:///C:/xxx/start.html-rev," and the web content file path 702 is "C:/xxx/start.html-rev."

Here, the examples of the first and second web content indicate a start page of the browser 220, and this page is necessarily read and displayed when the browser is activated. The start page may include processed content and non-processed content prepared by applying the driving restriction or may include single content, for example, so that only content to which it is unnecessary to apply the driving restriction is displayed. Further, the start page may be a page (a blank page) that is displayed fully in pure white.

In third web content, the web content URL 701 is "http://aaa.jp/a.html," and the web content file path 702 is "C:/ddd/a.html."

Further, fourth web content is content obtained by performing the restriction processing on the third web content, the web content URL 701 is "http://aaa.jp/a.html-rev," and the web content file path 702 is "C:/ddd/a.html-rev."

Here, the example in which the web content storage unit 308 has web content storage locations for holding both the non-processed web content and the processed web content has been described. As described above, since both the non-processed web content and the processed web content are held, it is possible to switch application and release of the restriction immediately according to the user's operation or the driving state of the vehicle.

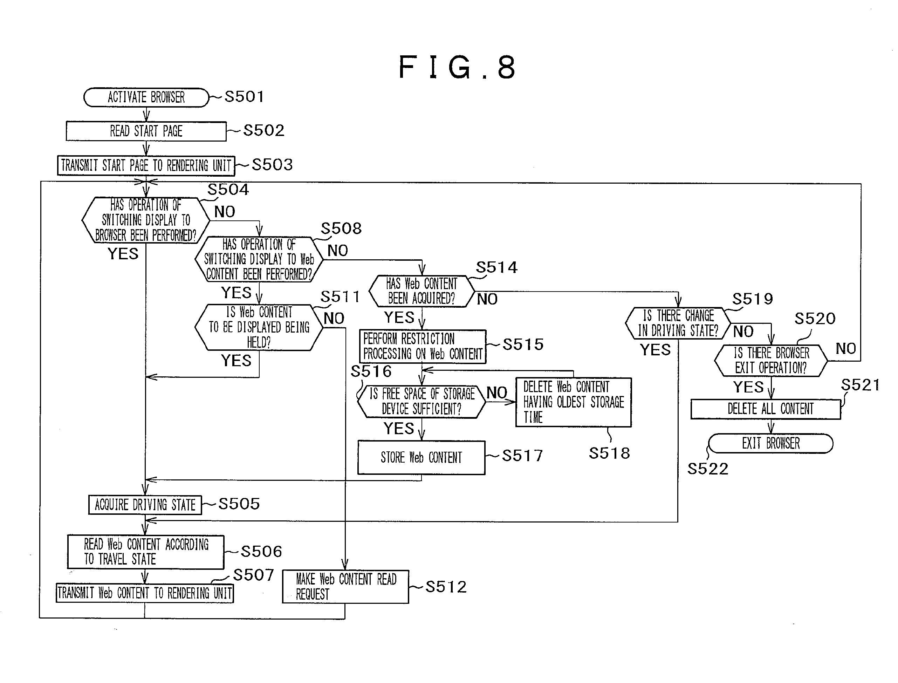

Next, processing of the regulating unit 300 of the browser 220 will be described with reference to FIG. 8. FIG. 8 is a flowchart illustrating processing of the regulating unit 300 of the browser 220.

As illustrated in FIG. 8, after the browser is activated (S501), first, the start page is read from the web content storage unit 308 (S502), and the start page is transmitted to the rendering unit 303 (S503).

Thereafter, when the user performs an operation of switching a display from an application other than the browser operating on the in-vehicle terminal 10 to the browser 220 (S504), the driving state of the vehicle at the current point in time is acquired (S505), and web content according to the driving state is read (S506), and transmitted to the rendering unit 303 (S507).

Then, when the user performs an operation of switching a display to another web content on the browser 220 such as "back," "forward," or switching of a tab (S508), the process proceeds to S511.

Another web content displayed after an operation such as "back," "forward," or switching of a tab needs to be displayed based on a determination result of the driving state of the vehicle at the current point in time. In this regard, it is determined whether or not web content to be displayed is being stored in the web content storage unit 308 (S511).

When the web content to be displayed is being stored in the web content storage unit 308, the driving state is acquired (S505), and web content according to the driving state is read (S506) and transmitted to the rendering unit 303 (S507).

On the other hand, when the web content to be displayed is not being stored in the web content storage unit 308, a request to read web content again is transmitted to the browser control unit 350 in order to acquire web content from the browser cache 302 or the web server 50 (S512).

When the operation of switching a display to the web content is performed in S508 and then the rendering IF 305 of the regulating unit 300 acquires the content read from the web server 50 or the browser cache 302 from the browser control unit 350 (S514), the driving restriction processing is performed on content to which it is necessary to apply the restriction (S515), and content to which it is unnecessary to apply the restriction is transmitted to the rendering unit 303 without change. The non-processed web content and the processed web content are stored in the web content storage unit 308, but at this time, when the free space of the auxiliary storage device 208 of the in-vehicle terminal 10 is smaller than a total size of the non-processed web content and the processed web content to be stored (S516), web content having the oldest storage time among the web content held in the auxiliary storage device 208 is deleted (S518). This operation is repeated until the auxiliary storage device 208 has the sufficient free space, and the non-processed web content and the processed web content are stored in the external storage device (S517). After the non-processed web content and the processed web content are stored, the driving state is acquired (S505), and web content according to the driving state is read (S506) and transmitted to the rendering unit 303 (S507).

Further, even when the rendering IF 305 of the regulating unit 300 has not acquired the content read from the web server 50 or the browser cache 302 from the browser control unit 350 (S514), it is necessary to control the driving restriction of the web content display at a timing at which the driving state of the vehicle is changed. When the driving state of the vehicle changes from "stop" to "move" or from "move" to "stop" (S519), web content according to the changed driving state is read (S506) and transmitted to the rendering unit (S507).

Further, when the user performs an operation of ending an operation of the browser 220 (S520), all web content stored in the web content storage unit 308 except the start page is deleted (S521), and the browser is exited (S522).

In this example, the web content storage information table includes the record of the URL and the file path of the non-processed web content and the record of the URL and the file path of the processed web content.

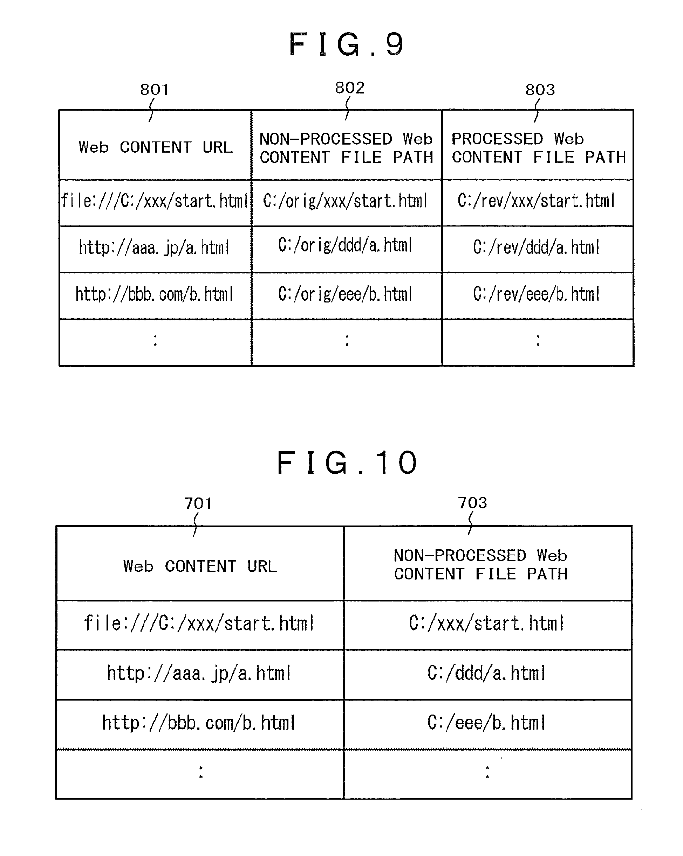

On the other hand, another example of the web content storage information table will be described with reference to FIG. 9. FIG. 9 is a diagram illustrating an example of the web content storage information table (2/3).

The web content storage information table of this example holds a single URL serving as an index and corresponding file paths before and after processing as a record.

In the web content storage information table illustrated in FIG. 7, the method in which the restriction control unit 306 reads any one of web content in which different URLs before and after processing are set as an index according to the driving state of the vehicle is used.

On the other hand, as illustrated in FIG. 9, a method in which a single web content URL 801 serving as an index and corresponding file paths before and after processing are held as a record, and according to the driving state, content stored at a non-processed web content file path 802 is read while stopping, or content stored at a processed web content file path 803 is read while moving may be used. In this case, the web content storage unit 308 illustrated in FIG. 6 determines which of non-processed web content and processed web content is read according to the driving state of the vehicle.

Here, the web content URL 801 indicates a URL set as an index used to search for web content displayed when the user's operation is performed, or the driving state is changed.

The non-processed web content file path 802 indicates a storage location in a file system of a file body of non-processed web content in the storage device of the in-vehicle terminal 10.

The processed web content file path 803 indicates a storage location in a file system of a file body of processed web content in the storage device of the in-vehicle terminal 10.

In the example illustrated in FIG. 9, for first web content, the web content URL 801 is "file:///C:/xxx/start.html," the non-processed web content file path 802 corresponding thereto is "C:/orig/xxx/start.html," and the processed web content file path 803 is "C:/rev/xxx/start.html."

Here, the example of the first web content indicates the start page of the browser 220, and this page is necessarily read and displayed when the browser is activated.

For second web content, the web content URL 801 is "http://aaa.jp/a.html," the non-processed web content file path 802 corresponding thereto is "C:/orig/ddd/a.html," and the processed web content file path 803 is "C:/rev/ddd/a.html."

In the example of the web content storage information table illustrated in FIG. 9, the restriction control unit 306 may recognize the single URL as an index, and when the URL is transferred to the web content storage unit 313, it is possible to determine which of the non-processed content and the processed content is read according to the driving state in the web content storage unit 313.

Next, a data table of the web content storage unit 308 that stores only the non-processed web content will be described.

Further, in the example of the web content information storage tables illustrated in FIGS. 7 and 9, the method of storing both the non-processed web content and the processed web content is applied, but only the non-processed web content may be stored, the restriction processing unit 307 may process the non-processed web content only when processing is necessary, and the driving restriction may be applied.

An example in which only the non-processed web content is stored, and the non-processed web content is processed only when processing is necessary will be described below with reference to FIG. 10. FIG. 10 is a diagram illustrating an example of the web content storage information table (3/3).

Each record of the web content storage information table illustrated in FIG. 10 includes a web content URL 701 and a non-processed web content file path 703.

Here, the web content URL 701 indicates a URL set as an index used to search for web content displayed when the user's operation is performed, or the driving state is changed.

The non-processed web content file path 703 indicates a storage location in a file system of a file body of non-processed web content in the storage device of the in-vehicle terminal 10.

In the example of FIG. 10, for first web content, the web content URL 701 is "file:///C:/xxx/start.html," and the non-processed web content file path 703 corresponding thereto is "C:/xxx/start.html."

Here, the example of the first web content indicates the start page of the browser 220, and this page is necessarily read and displayed when the browser is activated.

For second web content, the web content URL 701 is "http://aaa.jp/a.html," and the non-processed web content file path 703 is "C:/ddd/a.html."

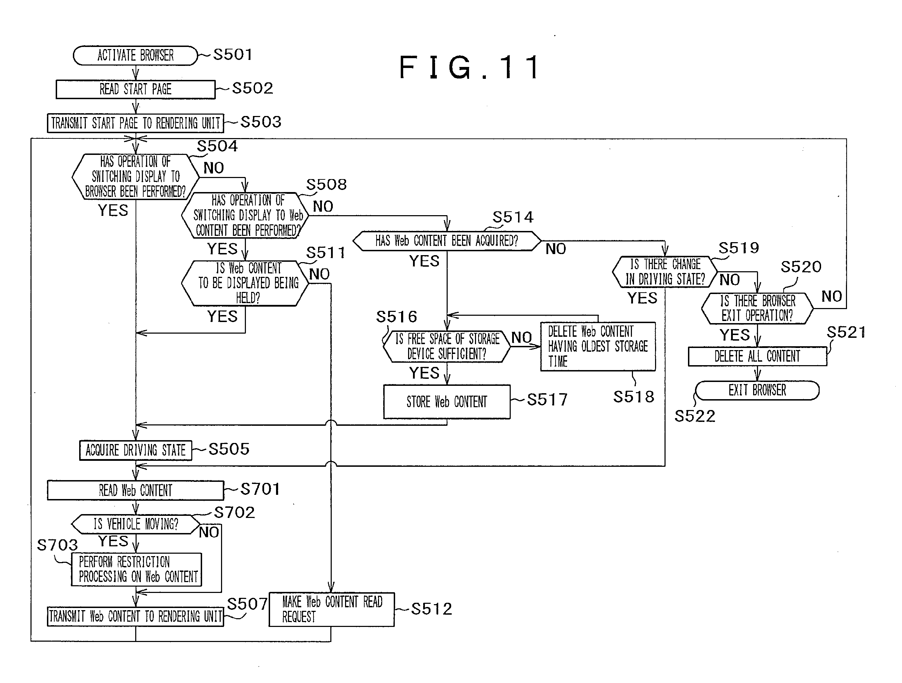

Next, processing of the regulating unit 300 of the browser 220 when only the non-processed web content is held will be described with reference to FIG. 11.

FIG. 11 is a flowchart illustrating processing of the regulating unit 300 of the browser 220 when only the non-processed web content is held.

As illustrated in FIG. 11, a difference with the process of FIG. 10 is a process subsequent to S505, and after the driving state is acquired (S505), the non-processed web content is read (S701). At this time, while the vehicle is moving (S702), the restriction processing is performed on the read non-processed web content (S703), and while the vehicle is stopping, the non-processed web content is not processed but transmitted to the rendering unit (S507).

According to the example of holding only the non-processed web content described with reference to FIGS. 10 and 11, it is possible to reduce the usage of the auxiliary storage device 208 to be smaller than when both the non-processed web content and the processed web content are held.

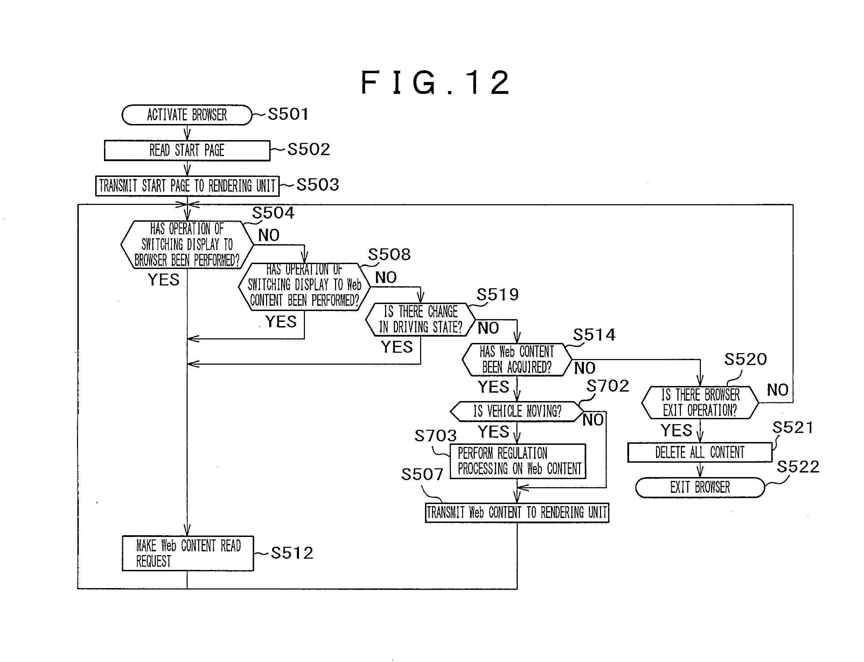

As another example, processing of the regulating unit 300 of the browser 220 when no web content is held will be described with reference to FIG. 12.

FIG. 12 is a flowchart illustrating processing of the regulating unit 300 of the browser 220 when no web content is held.

The method of holding the non-processed web content and the processed web content or only the non-processed web content has been described above, but any of web content may not be held.

As illustrated in FIG. 12, when the user performs an operation of switching a display from an application other than the browser operating on the in-vehicle terminal 10 to the browser 220 (S504), when the user performs an operation of switching a display to another web content on the browser 220 such as "back," "forward," or switching of a tab (S508), or when the user's operation is not performed, and the driving state of the vehicle is changed (S519), a request to read web content again is transmitted to the browser control unit 350 in order to acquire web content to be displayed from the browser cache 302 or the web server 50 (S512).

Further, when the content read from the web server 50 or the browser cache 302 is acquired from the browser control unit 350 (S514), at this time, in a state in which the vehicle is moving (S702), the restriction processing is performed on the read non-processed web content (S703), and in a state in which the vehicle is stopping, the non-processed web content is not processed and is transmitted to the rendering unit (S507).

Here, the processing of the regulating unit 300 when no web content is held has been described. According to this processing, since no web content is held, it is possible to reduce the usage of the auxiliary storage device 208 to be smaller than when both the non-processed web content and the processed web content are held. Further, since content is read again from the browser cache 302 or the web server 50 each time the user's operation is performed or the driving state is changed, new information is consistently supplied, compared to when the non-processed web content and the processed web content are held.

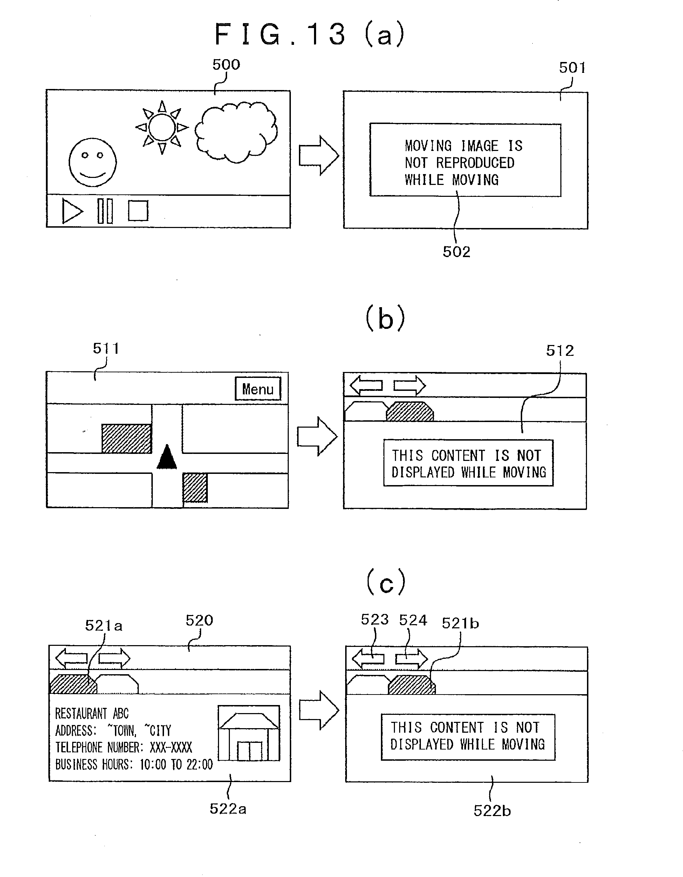

Next, a user interface provided by the in-vehicle information communication system according to the first embodiment of the present invention will be described with reference to FIGS. 13A to 13C. FIGS. 13A to 13C are diagrams illustrating the navigation and the screen of the browser 220 displayed and provided by the in-vehicle information communication system.

As illustrated in FIG. 13(a), a screen 500 displayed on the browser 220 is assumed to be a moving image and conflict with the restriction rule 244. At this time, content is processed by the restriction processing unit 307 of the regulating unit 300 as displayed on a screen 501. In the processed content, a message 502 indicating that a moving image is not reproduced while moving is displayed on the moving image portion.

As illustrated in FIG. 13(b), a screen 511 of a map of a car navigation application is assumed to be displayed, and the user is assumed to perform switching to a display screen 512 of the browser 220 while the vehicle 30 is moving. At this time, when web content such as a moving image conflicting with the restriction rule 244 is included in the display screen 512 of the browser 220, processed content is displayed.

As illustrated in FIG. 13(c), a display screen 520 of the browser 220 is assumed to be displayed while the vehicle 30 is moving. A web page 522a is assumed to correspond to a tab 521a of the display screen 520, and a web page 522b is assumed to correspond to a tab 521b. Here, when the web page 522a is being displayed, if switching to the web page 522b of the tab 521b is performed through the operating device 207 while the vehicle 30 is moving, and web content such as a moving image conflicting with the restriction rule 244 is included in the web page 522b, processed content is displayed.

In the example illustrated in FIG. 13(c), the web page is switched according to the selection of the tab, but similarly, even when the web page is switched by a [back] button 523 or a [forward] button 524 while moving, and even when web content conflicting with the restriction rule 244 is included in the switched web page, processed content is displayed.

### [Second embodiment]

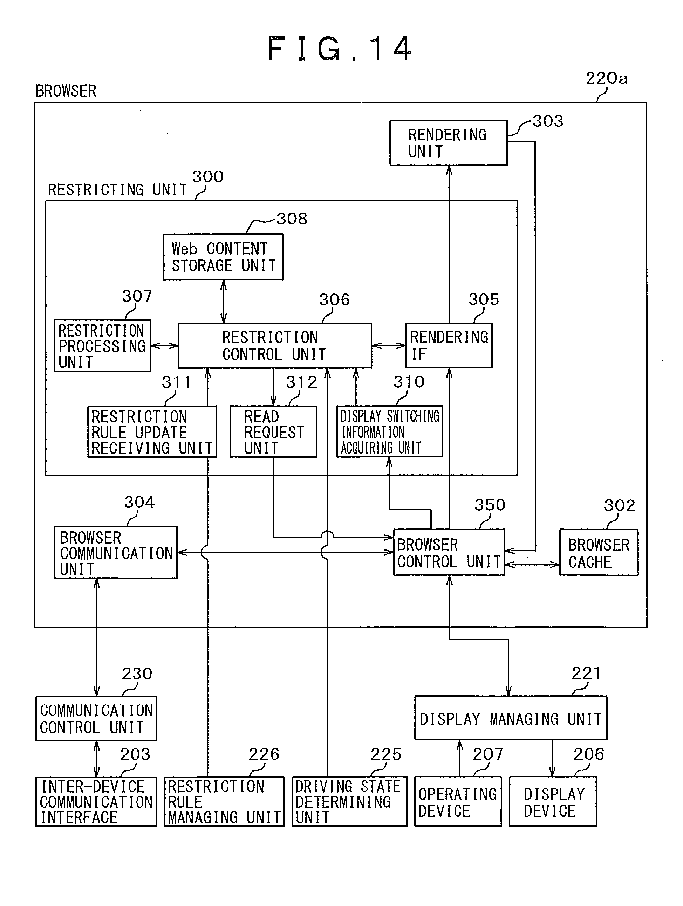

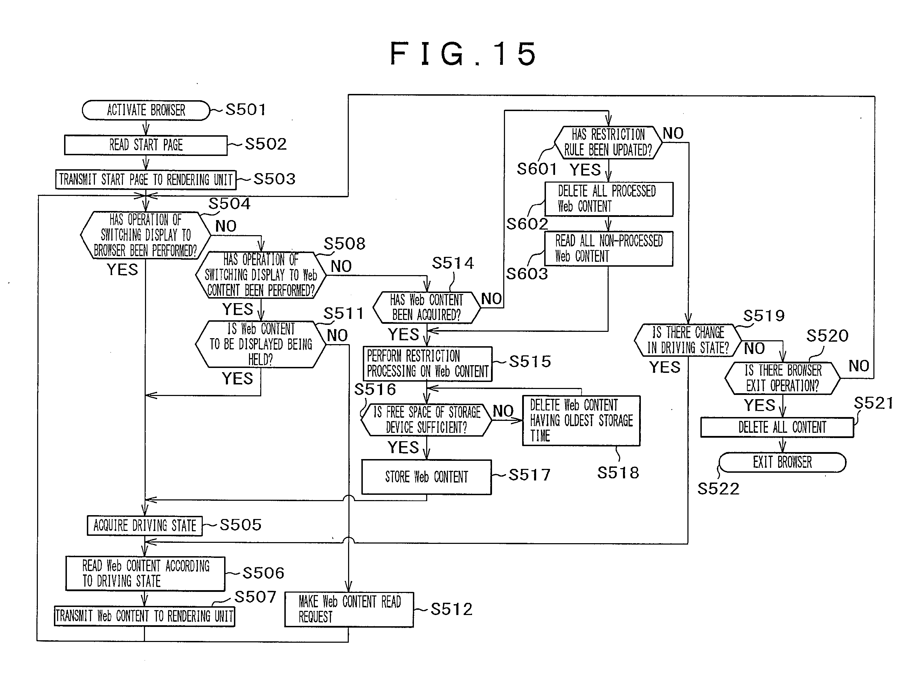

Next, a second embodiment according to the present invention will be described with reference to FIGS. 14 and 15. In the first embodiment, the configuration of the browser of displaying non-processed web content and processed web content differently according to the driving state has been described. In the first embodiment, the restriction rule 244 for processing the browser is the fixed rule as illustrated in FIG. 4.

On the other hand, in the present embodiment, a configuration and processing are roughly similar to those of the browser according to the first embodiment, but it is considered that the restriction rule 244 for processing the browser can be updated.

Further, when the restriction rule 244 is updated, it is necessary to process web content being displayed and processed web content held in the web content storage unit 308 again.

First, a configuration of a browser 220 according to the second embodiment of the present invention will be described with reference to FIG. 14. FIG. 14 is a configuration diagram of the browser 220a according to the second embodiment of the present invention.

As illustrated in FIG. 14, a restriction rule update receiving unit 311 is added to the configuration of the browser 220 illustrated in FIG. 6.

Upon receiving an update notification of the restriction rule 244 from the restriction rule managing unit 226 of the in-vehicle terminal 10, the restriction rule update receiving unit 311 transmits it to the restriction control unit 306.

The remaining components illustrated in FIG. 14 are the same as those illustrated in FIG. 6.

Next, processing a regulating unit 300a of the browser 220a in which the update of the restriction rule 244 is considered will be described with reference to FIG. 15. FIG. 15 is a flowchart illustrating the regulating unit 300a of the browser 220a according to the second embodiment of the present invention.

As illustrated in FIG. 15, when the restriction rule update receiving unit 311 notifies the restriction control unit 306 of the fact that the restriction rule 244 has been updated (S601), first, the restriction control unit 306 deletes all processed web content stored in the web content storage unit 308 (S602). Then, all non-processed web content is read (S603), and the restriction processing unit 307 performs processing based on the updated restriction rule 244 (S515).

Then, it is checked whether or not the free space of the auxiliary storage device 208 is sufficient (S516), and when the free space of the auxiliary storage device 208 is insufficient, web content having the oldest storage time is deleted (S518), and then processed web content is stored (S517).

Thereafter, the driving state is acquired (S505), and web content according to the driving state is read (S506) and transmitted to the rendering unit 303 (S507).

The remaining processing steps illustrated in the flowchart of FIG. 15 are the same as those illustrated in FIG. 7.

Here, the configuration of the browser 220 and the processing of the regulating unit 300a in which the update of the restriction rule 244 is considered has been described. When the restriction rule 244 is updated, web content being displayed and processed web content held in the web content storage unit 308 are processed again, and thus web content can be displayed based on the latest restriction rule conforming to a law, a guideline, or the like.

### [Third embodiment]

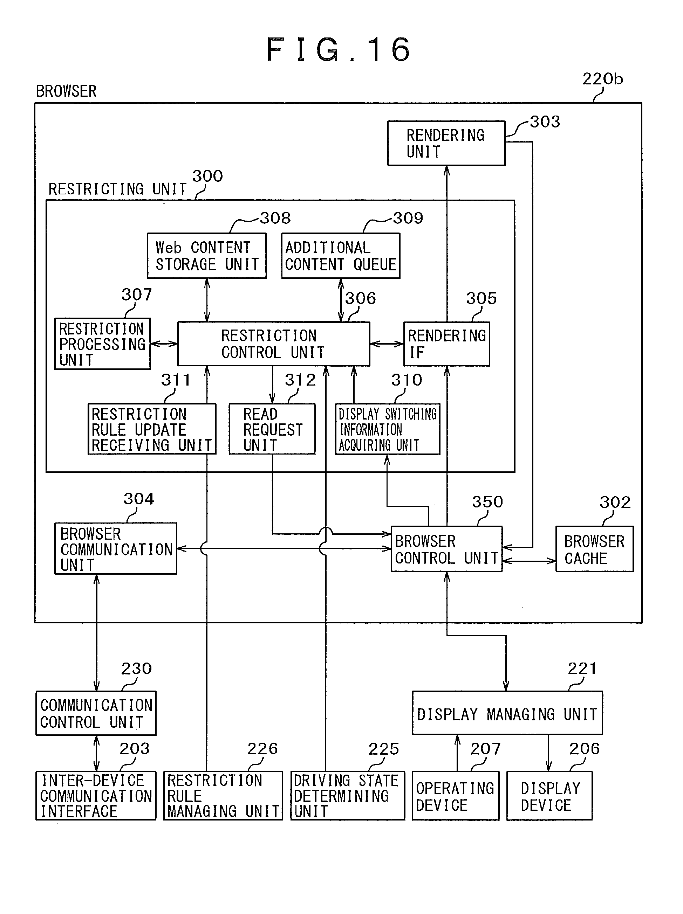

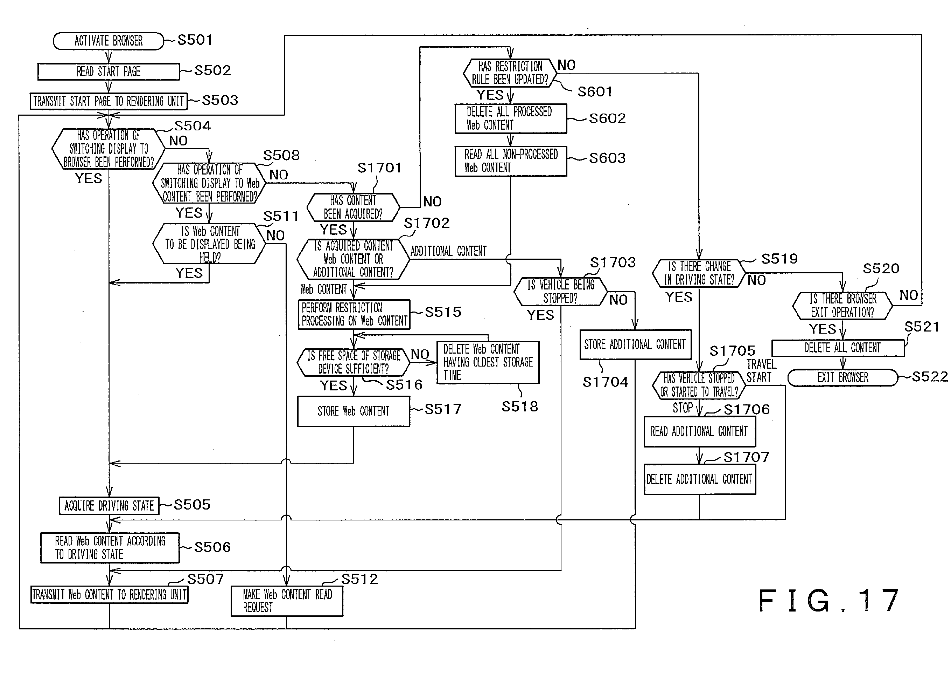

Next, a third embodiment of the present invention will be described with reference to FIGS. 16 and 17. In the first and second embodiments, the configuration of displaying non-processed web content and processed web content differently according to the driving state has been described.

Meanwhile, as described above, as the latest web-related technique, there is a technique in which after web content is read and displayed once, communication is performed between the server and the browser to acquire additional content for partially updating a display of web content such as XMLHttpRequest or WebSocket. For example, in WebSocket, the server can unilaterally transmit additional content to the browser without a request from the browser, but in the above embodiments, when there is additional content related to a moving image or the like, if web content is processed, the additional content is discarded, and the browser side should transmit the request again, and thus there is a problem in that an overhead is likely to occur.

In the present embodiment, it is possible to support the latest technique in which additional content for partially updating a display of web content is exchanged between the browser and the server in the second embodiment.

In other words, in the present embodiment, when communication is performed between the server and the browser after web content is read and displayed once, and then the in-vehicle terminal receives additional content for partially updating a display of web content, if it is difficult to reflect the additional content in the web content, the additional content is stored in a queue.

First, a configuration of a browser 220b according to the third embodiment of the present invention will be described with reference to FIG. 16. FIG. 16 is a configuration diagram of the browser 220b according to the third embodiment of the present invention.

As illustrated in FIG. 16, the browser 220b has a configuration in which an additional content queue 309 is added to the configuration of the browser 220a of FIG. 14 according to the second embodiment.

The additional content queue 309 is a queue that holds additional content for partially updating a display of web content which is acquired by communication between the server and the browser after web content is read and displayed once as in XMLHttpRequest or WebSocket.

When the rendering IF 305 acquires additional content, the additional content is transmitted to the restriction control unit 306. Here, the driving state of the vehicle is acquired from the driving state determining unit 225, and while stopping, the additional content is transferred to the rendering IF 305 and transmitted to the rendering unit 303. While moving, the additional content is stored in the additional content queue 309. All the additional content stored in the additional content queue 309 is read into the rendering unit 303 through the rendering IF 305 at a timing at which the driving state is changed from "move" to "stop."

The remaining components illustrated in FIG. 16 are the same as those illustrated in FIG. 14.

Next, processing of the regulating unit 300 of the browser 220b including a process of receiving additional content for partially updating a display of web content will be described with reference to FIG. 17. FIG. 17 is a flowchart illustrating processing of the regulating unit 300b of the browser 220b according to the third embodiment of the present invention.

As illustrated in FIG. 17, when the rendering IF 305 acquires content (S1701), it is determined whether or not the acquired content is web content configured by HTML, JavaScript, CSS, or the like or additional content for partially updating a display (S1702).

Then, when the acquired content is web content (other than additional content), the driving restriction processing is performed (S515), and when the free space of the auxiliary storage device 208 of the in-vehicle terminal 10 is smaller than a total size of the non-processed web content and the processed web content to be stored (S516), web content having the oldest storage time among the web content held in the web content storage unit 308 is deleted (S518). Then, this process is repeated until the auxiliary storage device 208 has the sufficient free space, the non-processed web content and the processed web content are stored (S517). After the non-processed web content and the processed web content are stored, the driving state is acquired (S505), and web content according to the driving state is read (S506) and transmitted to the rendering unit 303 (S507).

When the acquired content is additional content, first, the driving state of the vehicle is acquired (S1703), if the vehicle is stopping, the additional content is transmitted to the rendering unit without change (S507). If the vehicle is moving, the additional content is stored in the additional content queue 309 (S1704).

Further, when the driving state of the vehicle is changed (S519), the restriction control unit 306 determines whether the vehicle has "stopped" or "started to move" (S1705).

Then, when the driving state is changed from "move" to "stop," the restriction control unit 306 reads all the additional content stored in the additional content queue 309 (S1706), and deletes the read additional content (S1707). Thereafter, the non-processed web content is read according to the driving state (S506), and when there is additional content, the non-processed web content and the additional content are transmitted to the rendering unit (S507).

When the vehicle "started to move" processing related to the additional content is not performed, and the processed web content is read according to the driving state (S506) and transmitted to the rendering unit (S507).

The remaining steps illustrated in FIG. 17 are the same as those illustrated in FIG. 15.

Here, the processing of the regulating unit 300 in which acquisition of additional content for partially updating a display of web content is considered has been described. Accordingly, even when the driving restriction is being applied, the in-vehicle terminal 10 can receive additional content through the HTML-related technique such as XMLHttpRequest or WebSocket.

### [Fourth embodiment]

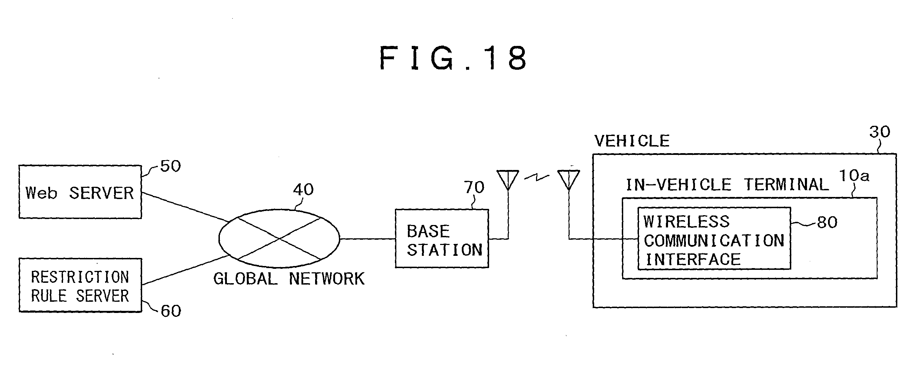

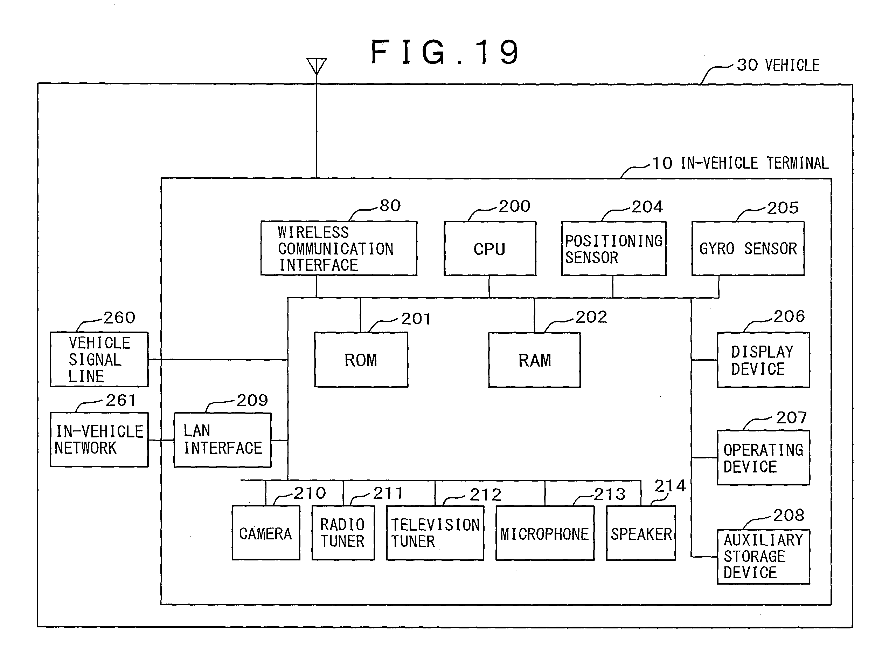

Next, a fourth embodiment according to the present invention will be described with reference to FIGS. 18 and 19.

In the in-vehicle information communication system according to the first embodiment of the present embodiment, the in-vehicle terminal 10 has no function of communicating directly with the Internet, and thus the in-vehicle terminal 10 communicates with the web server 50 or the restriction rule server 60 using the communication function of the mobile phone terminal 20.

In the present embodiment, the in-vehicle terminal is assumed to have a function of communicating directly with the Internet.

First, a system configuration of an in-vehicle information communication system according to the fourth embodiment of the present invention will be described with reference to FIG. 18.

FIG. 18 is a system configuration diagram illustrating a system overview of the in-vehicle information communication system according to the fourth embodiment of the present invention.

As illustrated in FIG. 18, an in-vehicle terminal 10a of the present embodiment includes a wireless communication interface 80 for communicating with the global network 40, and performs communication with the web server 50 or the restriction rule server 60 of the global network 40 through wireless communication with the base station 70.

The remaining components illustrated in FIG. 18 are the same as those illustrated in FIG. 1.

Next, a configuration of the in-vehicle terminal 10a according to the fourth embodiment of the present invention will be described with reference to FIG. 19.
FIG. 19 is a hardware configuration diagram of the in-vehicle terminal according to the fourth embodiment of the present invention.

As illustrated in FIG. 19, the in-vehicle terminal 10a according to the present embodiment has a configuration in which the wireless communication interface 80 is added to the in-vehicle terminal 10 of FIG. 2 according to the first embodiment.

The wireless communication interface 80 performs wireless communication with the base station 70, and performs communication with the web server 50 or the restriction rule server 60 of the global network 40 or another terminal. The wireless communication interface 80 may be an in-vehicle mobile phone terminal or may be a terminal having a connection function with a wireless LAN.

The remaining components illustrated in FIG. 18 are the same as those illustrated in FIG. 2.

Here, the configuration in which the in-vehicle terminal includes a communication device for communicating with the global network 40 has been described. Even when the in-vehicle terminal 10a is connectable directly with the global network 40 through the wireless communication interface 80 such as the in-vehicle mobile phone terminal or the terminal having a connection function with a wireless LAN, it is possible to apply or release the driving restriction, similarly to the first embodiment.

In the in-vehicle information communication system according to the present embodiment, there is an advantage in which a separate device such as a mobile phone terminal is unnecessary, and the operation can be performed only through the in-vehicle terminal.

### [Fifth embodiment]

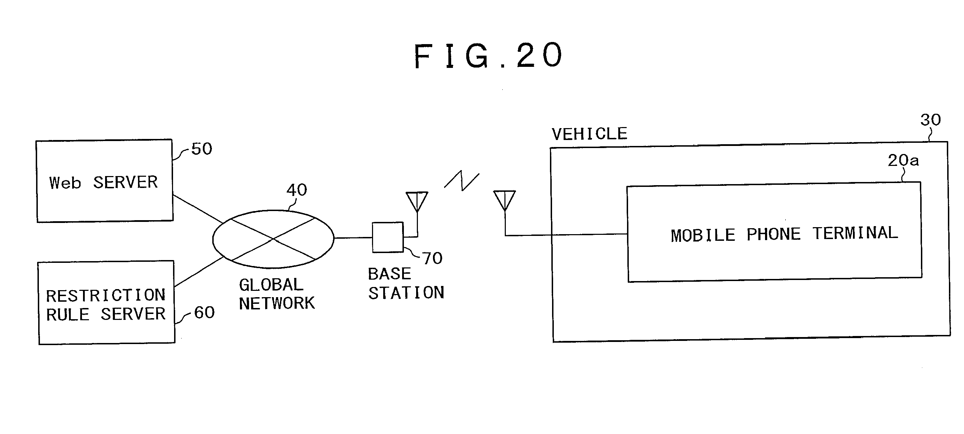

Next, a fifth embodiment according to the present invention will be described with reference to FIGS. 20 to 23.

In the in-vehicle information communication system according to the first embodiment of the present embodiment, the in-vehicle terminal 10 has no function of communicating directly with the Internet, and thus the in-vehicle terminal 10 communicates with the web server 50 or the restriction rule server 60 using the communication function of the mobile phone terminal 20.

In the present embodiment, the mobile phone terminal detects the driving state of the vehicle, and performs the display restriction on the browser.

First, a system configuration of an in-vehicle information communication system according to the fifth embodiment of the present invention will be described with reference to FIG. 20.

FIG. 20 is a system configuration diagram illustrating a system overview of the in-vehicle information communication system according to the fifth embodiment of the present invention.

As illustrated in FIG. 20, in the in-vehicle information communication system according to the present embodiment, a mobile phone terminal 20a in the vehicle 30 performs communication with the web server 50 or the restriction rule server 60 of the global network 40 through wireless communication with the base station 70. The mobile phone terminal 20a in the vehicle 30 has a function of detecting the driving state of the vehicle 30 as well.

The remaining components illustrated in FIG. 20 are the same as those illustrated in FIG. 1.

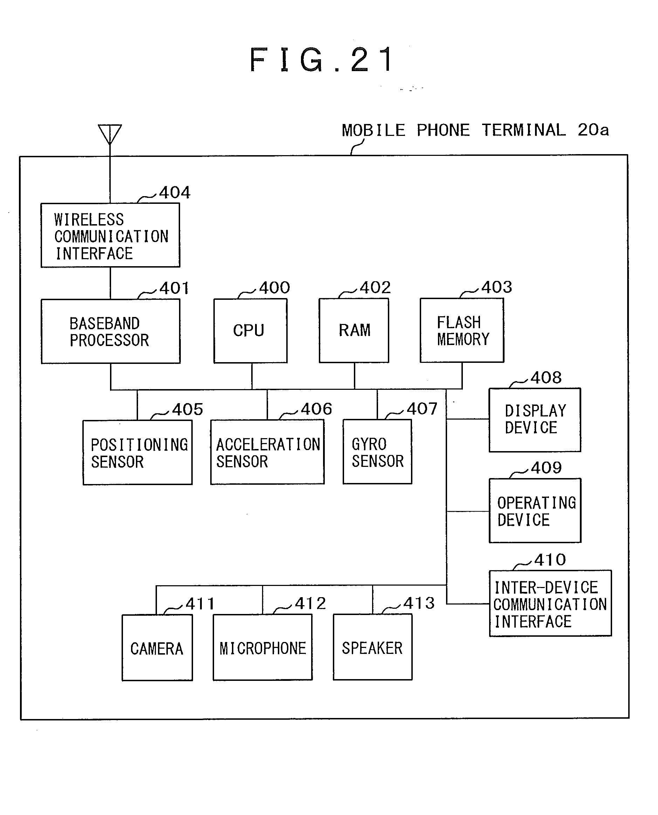

Next, a hardware configuration of a the mobile phone terminal 20a according to the fifth embodiment of the present invention will be described with reference to FIG. 21.

FIG. 21 is a hardware configuration diagram of the mobile phone terminal 20a according to the fifth embodiment of the present invention.

As illustrated in FIG. 21, the mobile phone terminal 20a includes a CPU 400, a baseband processor 401, a RAM 402, a flash memory 403, a wireless communication interface 404, a positioning sensor 405, an acceleration sensor 406, a gyro sensor 407, a display device 408, an operating device 409, an inter-device communication interface 410, a camera 411, a microphone 412, and a speaker 413 as hardware.

The CPU 400 is an operation control unit that controls the respective units of the mobile phone terminal 20a and executes car navigation application software or a browser program loaded onto the RAM 402.

The baseband processor 401 is a processor that controls a module related to communication or a phone call of the mobile phone terminal 20a.

The RAM 402 is a storage device that loads a program stored in the flash memory 403 and temporarily stores the program or stores work data.

The flash memory 403 is a non-volatile memory that stores a program or data. The flash memory 403 is a relatively large-capacity storage device that stores various kinds of data such as the map DB 240, the restriction rule 244, the audio data 245, and the moving image data 246, the car navigation application software, and the browser program. Further, when information is old, and it is necessary to update the information, the mobile phone terminal 20a can be connected to the global network 40 via the base station 70 through the wireless communication interface 404, acquire various kinds of data such as the map DB 240, the restriction rule 244, the audio data 245, and the moving image data 246 stored in the flash memory 403 and the like from the server connected with the global network 40, and update the acquired data. Further, software such as the browser can be updated to the latest version from the server.

The wireless communication interface 404 is an interface device that converts a signal of the baseband processor 401 into a radio frequency signal of a radio band or, conversely, converts a radio frequency signal of a radio band into a signal of the baseband processor 401. The mobile phone terminal 20a can communicate with the base station 70 through the wireless communication interface 404, transceives a phone call or an electronic mail, and browse the web page by the browser. An Ultra High Frequency (UHF) band is commonly used as a radio band.

The positioning sensor 405 is a sensor that measures its own position indicated by a latitude and a longitude on the earth.

The acceleration sensor 406 is a sensor that measures acceleration of the mobile phone terminal 20a. Thus, it is possible to measure acceleration of the vehicle 30 equipped with the mobile phone terminal 20a indirectly as well.

The gyro sensor 407 is a sensor that measures an angle and angular velocity of the mobile phone terminal 20a. Thus, it is possible to measure an angle and angular velocity of the vehicle 30 indirectly as well.

The display device 408 is a device that displays image information for the user such as an LCD or an organic EL display, and a display device having a display size of a screen of 3 to 5 inches is commonly used.

The operating device 409 is a device used when the user operates the mobile phone terminal 20a with his/her finger such as a button, a switch, a keyboard, or a touch panel.

The inter-device communication interface 410 is an interface device that is connected with another device, for example, the in-vehicle terminal and exchanges data with the in-vehicle terminal. A connection scheme may be a wired connection conforming to a standard such as USB or HDMI or a wireless connection conforming to a standard such as IEEE 802.11a/b/g/n of a wireless LAN or Bluetooth.

The camera 411 is an optical device that photographs a region around the mobile phone terminal 20a and acquires an image.

The microphone 412 is a device that collects the user's utterances or a sound around the mobile phone terminal 20a.

The speaker 413 is a device that carries information based on a sound to the user. Although not illustrated, an earphone, a headphone, or the like may be used as a sound output device.

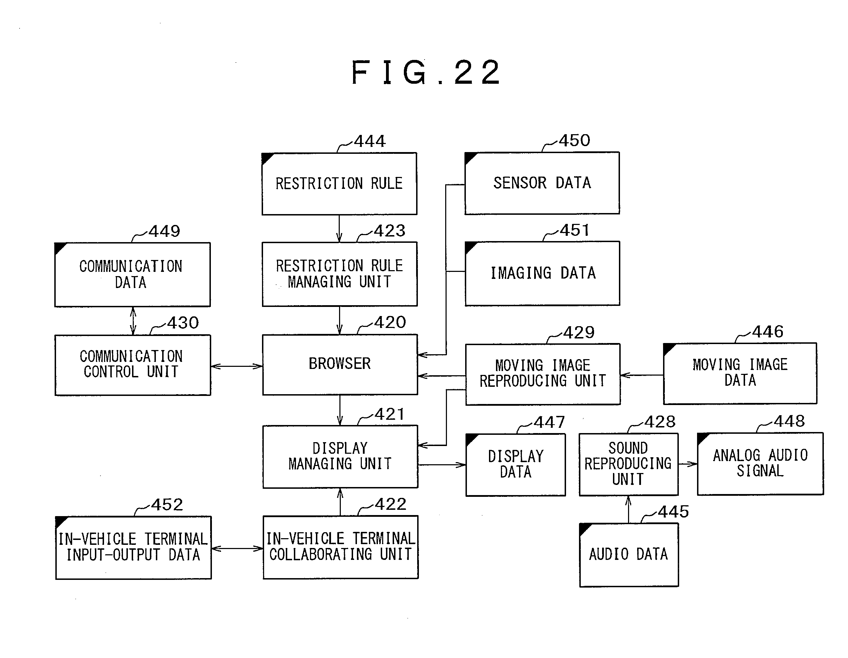

Next, a software configuration of the mobile phone terminal 20a will be described with reference to FIG. 22.

FIG. 22 is a functional configuration diagram of the in-vehicle terminal according to the fifth embodiment of the present invention.

Software of the mobile phone terminal 20a according to the fifth embodiment of the present invention is mainly a group of components for performing web browsing, and includes a browser 420, a display managing unit 421, an in-vehicle terminal collaborating unit 422, a restriction rule managing unit 423, a sound reproducing unit 428, a moving image reproducing unit 429, and a communication control unit 430 as illustrated in FIG. 22.

The respective components are installed as a computer program, particularly, an application program operating on an OS, stored in the flash memory 403, loaded onto the RAM 402, and analyzed and executed as a program by the CPU 400 or the baseband processor 401.

Further, Data dealt by the mobile phone terminal 20a according to the fifth embodiment of the present invention includes a restriction rule 444, audio data 445, moving image data 446, display data 447, an analog audio signal 448, communication data 449, sensor data 450, imaging data 451, and in-vehicle terminal input-output data 452.

The browser 420 analyzes a file that is described in a mark-up language such as the HTML or the XML and acquired from the web server 50, a script language file described in JavaScript or the like, a style definition file such as a CSS, or the like, and performs a process of arranging a moving image file, an image file, a sound file, or the like acquired in a similar manner based on an analysis result. Then, as a processing result, the display data 447 is displayed on the display device 408 through the display managing unit 421, or audio information is output from the speaker 413.

The display managing unit 421 performs control such that information displayed on the display device 408 is switched. For example, the display managing unit 421 performs control for switching a display when the user operates the operating device 409 or controls a display of each application such as the browser 420 or the moving image reproducing unit 429 operating on the mobile phone terminal 20a.

The in-vehicle terminal collaborating unit 422 collaborates with an external in-vehicle terminal through the inter-device communication interface 410, and receives and outputs the in-vehicle terminal input-output data 452. The in-vehicle terminal collaborating unit 422 acquires operation information when the in-vehicle terminal is operated, vehicle information acquired by the in-vehicle terminal, and the like, and transmits video information, image information, audio information, or control information of the in-vehicle terminal to the in-vehicle terminal.

The restriction rule managing unit 423 manages the restriction rule 444 for the driving restriction when web content acquired from the web server 50 is displayed. The restriction rule managing unit 423 reads the restriction rule 444 according to an instruction given from the browser 420 or notifies the browser 420 of the fact that the restriction rule 444 has been updated.

The sound reproducing unit 428 acquires the audio data 445, decodes the audio data 445, and outputs the decoded information to the speaker 413 or a headphone (not illustrated) as an analog audio signal.

The moving image reproducing unit 429 acquires the moving image data 446, decodes the moving image data 446, causes the decoded information to be displayed on the display device 408 as a moving image through the display managing unit 421, and causes the sound to be output from the speaker 413.

The communication control unit 430 performs processing of a communication protocol such as a TCP/IP, receives information from another device or server as the communication data 449, acquires information from the browser 420 or the like, generates information according to a communication protocol designated by another terminal or server, and transmits the generated information as the communication data 449.

The restriction rule 444 is a processing rule for securing safety of the passenger even when the web content is displayed while moving. The restriction rule 444 is the same as one described in the first embodiment.

The audio data 445 is data that is acquired from the microphone 412 or included in the moving image data, and is converted into the analog audio signal 448 through the sound reproducing unit 428.

The analog audio signal 448 is an analog signal obtained by converting the audio data 445 through the sound reproducing unit 428, and is input to the speaker 413 or the headphone (not illustrated) and output to a listener as a sound.

The moving image data 446 is source data input to the moving image reproducing unit 429 for moving image reproduction such as Moving Picture Experts Group (MPEG) data.

The communication data 449 is data transceived by the communication control unit 430.

The sensor data 450 is data output from the positioning sensor 405, the acceleration sensor 406, and the gyro sensor 407, and the sensor data 450 is input to a driving state determining unit 2410 (which will be described later) of the browser 420 and used for determination of the driving state of the vehicle 30.

The imaging data 451 is data photographed by the camera 411, and the imaging data 451 is also input to the driving state determining unit 2410 of the browser 420 and used for determination of the driving state of the vehicle 30.

The in-vehicle terminal input-output data 452 is data that is input and output between the in-vehicle terminal and the mobile phone terminal 20a, and includes the operation information when the in-vehicle terminal is operated, the vehicle information acquired by the in-vehicle terminal, the video information, the image information, the audio information, the control information of the in-vehicle terminal, and the like.

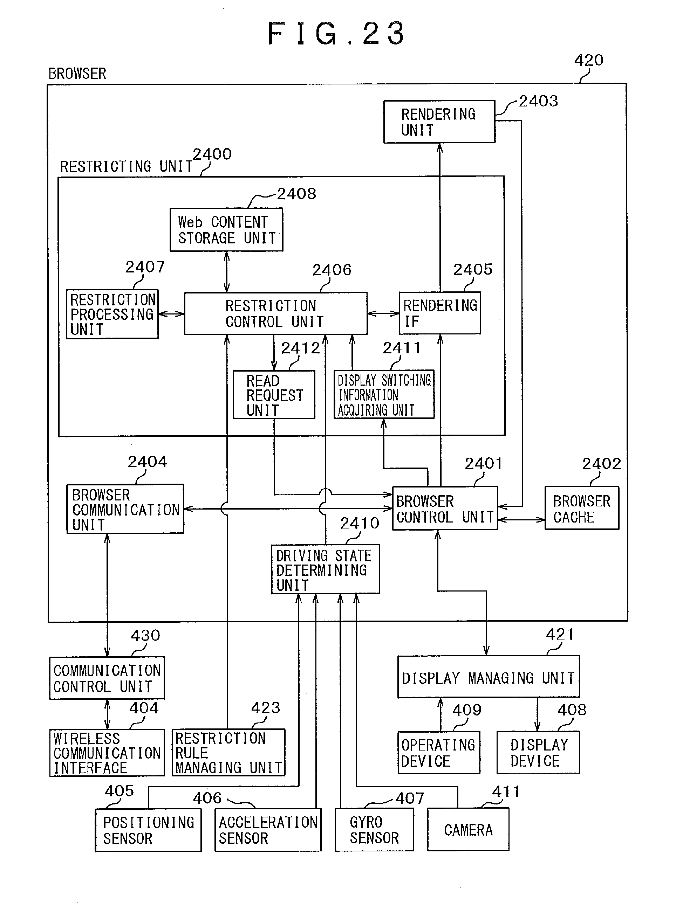

Next, a configuration of the browser 420 according to the fifth embodiment of the present invention will be described with reference to FIG. 23.

FIG. 23 is a configuration diagram of the browser 420 according to the fifth embodiment of the present invention.

The browser 420 according to the present embodiment includes a browser control unit 2401, a browser cache 2402, a rendering unit 2403, a browser communication unit 2404, and a regulating unit 2400 as illustrated in FIG. 6.

When the user performs an operation of switching a display to another web content on the browser 420, for example, when the user performs an operation of switching a display from another application software to the browser 420 or an operation of switching a display to another web content such as "back" or "forward" or when a plurality of pages are opened on a single window and switched by a tab operation, the browser control unit 2401 transfers information related to web content to be displayed after switching to the regulating unit 2400. Further, when there is a web content re-read request (reload) (a display screen update request) from the regulating unit 2400, web content currently being displayed is read from the web server 50 or the browser cache 2402.

The browser cache 2402, the rendering unit 2403, the browser communication unit 2404 are the same as the components of the related art illustrated in FIG. 5.

The driving state determining unit 2410 determines whether or not the vehicle 30 is moving based on the sensor data 450 output from the positioning sensor 405, the acceleration sensor 406, and the gyro sensor 407 of the mobile phone terminal 20a and the imaging data 451 output from the camera 411. The driving state determining unit 2410 may be implemented as a component separate from the browser 420.

The regulating unit 2400 applies or release the driving restriction based on the restriction rule 444 according to the user's operation or the driving state of the vehicle when web content is displayed on the screen of the mobile phone terminal 20a. The regulating unit 2400 includes a rendering IF 2405, a restriction control unit 2406, a restriction processing unit 2407, a web content storage unit 2408, a display switching information acquiring unit 2410, and a read request unit 2412.

The rendering IF 2405 is a portion undertaking an interface between the browser control unit 2401 and the rendering unit 2403.

If information acquired from the browser control unit 2401 is an inquiry about a process corresponding to an operation when the user performs an operation of selecting a hyperlink included in web content, the information is transmitted directly to the rendering unit 2403.

When the information acquired from the browser control unit 2401 is content read from the web server 50 or the browser cache 2402, it is determined whether or not it is necessary to apply the restriction, and content to which it is necessary to apply the restriction is transmitted to the restriction control unit 2406 to be subject to the driving restriction processing, and content to which it is unnecessary to apply the restriction is transmitted to the rendering unit 2403 without change.

Further, when the non-processed web content and the processed web content are acquired from the restriction control unit 2406, the non-processed web content and the processed web content are transferred to the rendering unit 2403 without change.

When the user performs an operation of switching a display from another application to the browser 420 or an operation of switching a display of web content such as "back" or "forward," a display switching information acquiring unit 2411 acquires information related to web content to be displayed from the browser control unit 2401, and transmits the acquired information to the restriction control unit 2406.

The restriction processing unit 2407 processes web content to which it is necessary to apply the driving restriction based on the restriction rule 244 acquired from the restriction rule managing unit 226 of the in-vehicle terminal 10 so that safety is secured even when the web content is displayed while moving.

The web content storage unit 2408 holds the processed web content that has been subject to the driving restriction processing and the non-processed web content.

When the user performs an operation of switching a display from another application to the browser 420 or an operation of switching a display of web content such as "back" or "forward," but web content to be displayed is not being held in the web content storage unit 2408, the read request unit 2412 requests the browser control unit 2401 to read web content to be displayed from the web server 50 or the browser cache 2402.

The restriction control unit 2406 causes the restriction processing unit 2407 to process the content acquired from the rendering IF 2405 according to the driving state of the vehicle acquired from the driving state determining unit 2410 of the in-vehicle terminal 10, or causes the non-processed web content and the processed web content to be stored in the web content storage unit 2408. Further, the restriction control unit 2406 acquires information related to web content to be displayed by the user's operation from the display switching information acquiring unit 2410, determines whether or not the web content is being stored in the web content storage unit 2408, reads the web content when the web content is determined to be being stored in the web content storage unit 2408, transmits the read web content to the rendering IF 2405, and requests the browser control unit 2401 to read the web content again through the read request unit 2412 when the web content is determined to be not being stored in the web content storage unit 2408.

In the present embodiment, the mobile phone terminal 20a reads data related to the driving state of the vehicle through the sensors and the camera, and restricts the display of the browser 420 according to the driving state determined in the browser 420. Thus, although the navigation device such as the in-vehicle terminal is not used, when the browser is browsed in the mobile phone terminal that is more widely being spread than the in-vehicle terminal, it is possible to apply the driving restriction even to a display of a web page switched by the user's operation.

### [Sixth embodiment]

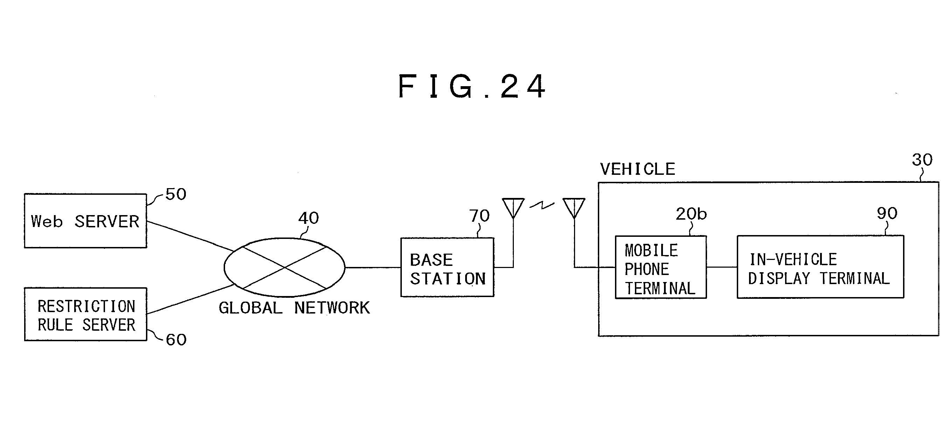

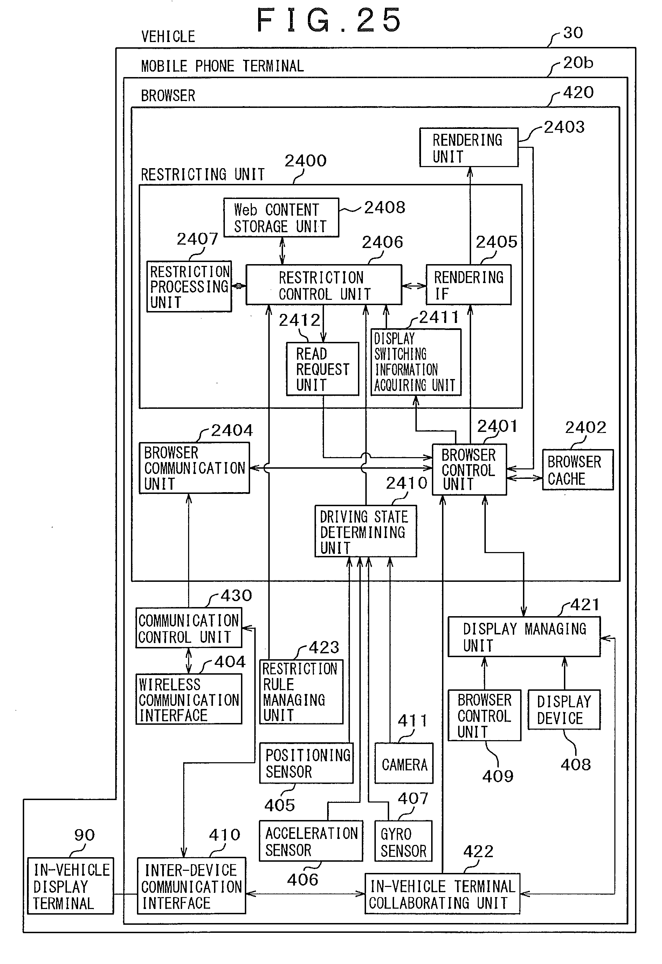

Next, a six embodiment of the present invention will be described with reference to FIGS. 24 and 25.

In the in-vehicle information communication system according to the fifth embodiment of the present embodiment, the mobile phone terminal detects the driving state of the vehicle, and performs the display restriction on the browser.

In the present embodiment, the vehicle 30 is equipped with an in-vehicle display terminal, separately from a mobile phone terminal, and an image generated by the mobile phone terminal 20b can be displayed on the in-vehicle display terminal.

First, a system configuration of an in-vehicle information communication system according to the sixth embodiment of the present invention will be described with reference to FIG. 24.

FIG. 24 is a system configuration diagram illustrating a system overview of the in-vehicle information communication system according to the sixth embodiment of the present invention.

As illustrated in FIG. 24, in the in-vehicle information communication system according to the present embodiment, a mobile phone terminal 20b and an in-vehicle display terminal 90 in the vehicle 30 are connected to each other, and the mobile phone terminal 20b performs communication with the web server 50 or the restriction rule server 60 of the global network 40 through wireless communication with the base station 70. The mobile phone terminal 20b in the vehicle 30 has a function of detecting the driving state of the vehicle 30 as well. Further, when content acquired by the mobile phone terminal 20b is displayed on a screen, screen information of the mobile phone terminal 20b is transferred to the in-vehicle display terminal 90, and the content is displayed on the screen of the in-vehicle display terminal 90.

The remaining components illustrated in FIG. 24 are the same as those illustrated in FIG. 1.

The mobile phone terminal 20a has the same hardware configuration as that of FIG. 21 according to the fifth embodiment.

Next, a configuration of the mobile phone terminal 20b according to the sixth embodiment of the present invention will be described with reference to FIG. 25.

FIG. 25 is a configuration diagram of the mobile phone terminal 20b according to the sixth embodiment of the present invention.

The in-vehicle display terminal 90 according to the present embodiment is assumed to have a function of receiving the user's operation, transmitting operation information to the mobile phone terminal 20a, and controlling the mobile phone terminal 20. At this time, when the browser 420 in the mobile phone terminal 20 is controlled based on the operation information acquired from the in-vehicle display terminal 90, a configuration capable of applying or releasing the driving restriction is necessary.

As illustrated in FIG. 25, there is the mobile phone terminal 20b in the vehicle 30, the mobile phone terminal 20b is connected with the global network 40 through the wireless communication interface 404, and connected with the in-vehicle display terminal 90 in the vehicle 30 through the inter-device communication interface 410.

Screen information when the browser 420, the moving image reproduction application, or the like operating on the mobile phone terminal 20a is executed is transferred from the display managing unit 421 to the in-vehicle display terminal 90 via the in-vehicle terminal collaborating unit 422 and the inter-device communication interface 410.

Further, when the inter-device communication interface 410 acquires the user's operation information from the in-vehicle display terminal 90, the in-vehicle terminal collaborating unit 422 determines that the browser 420 has been operated, and transmits the operation information to the browser control unit 2401 of the browser 420. Here, instead of transmitting the operation information directly to the browser control unit 2401, the operation information may be transferred to the browser control unit 2401 via the display managing unit 421.

The remaining components illustrated in FIG. 25 are the same as those illustrated in FIG. 23.

### [Seventh embodiment]

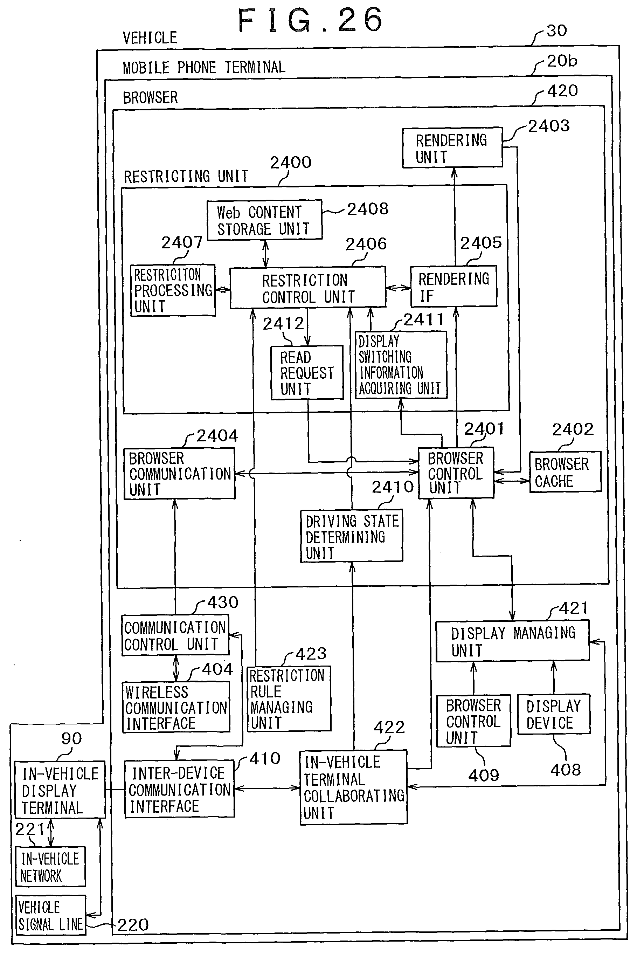

Next, a seventh embodiment of the present invention will be described with reference to FIG. 26.

FIG. 26 is a configuration diagram of a mobile phone terminal 20c according to the seventh embodiment of the present invention.

In the in-vehicle information communication system according to the sixth embodiment, the mobile phone terminal detects the driving state of the vehicle and performs the display restriction on the browser, the in-vehicle display terminal is installed in the vehicle 30, separately from the mobile phone terminal 20a, and the image generated by the mobile phone terminal 20a can be displayed on the in-vehicle display terminal.

In the present embodiment, similarly, the vehicle 30 is equipped with the in-vehicle display terminal 90a, separately from the mobile phone terminal 20c, and the image generated by the mobile phone terminal 20c can be displayed on the in-vehicle display terminal 90a, but the in-vehicle display terminal 90a detects the driving state of the vehicle instead of the mobile phone terminal 20c.

An in-vehicle display terminal 90a of the present embodiment is assumed to be connected with the vehicle 30 and have a function of acquiring information related to moving of the vehicle. As described above, when the mobile phone terminal 20 can acquire the vehicle information from the in-vehicle display terminal 90a, the driving state can be more accurately determined using the vehicle information acquired from the in-vehicle display terminal 90a rather than using the sensor in the mobile phone terminal 20.

As illustrated in FIG. 26, there is the mobile phone terminal 20c in the vehicle 30, the mobile phone terminal 20c is connected with the global network 40 through the wireless communication interface 404 and connected with the in-vehicle display terminal 90a in the vehicle 30 through the inter-device communication interface 410. Further, the in-vehicle display terminal 90a is connected with an in-vehicle network 221 and a vehicle signal line 220 of the vehicle 30 and can acquire information related to moving of the vehicle.

When the mobile phone terminal 20c acquires the user's operation information or the information related to moving of the vehicle from the in-vehicle display terminal 90a through the inter-device communication interface 410, the information is transmitted to the in-vehicle terminal collaborating unit 422. The in-vehicle terminal collaborating unit 422 determines that the acquired information is information directed to the browser 420, transmits the information to the driving state determining unit 2410 when the information is the information related to moving of the vehicle, and transmits the information to the browser control unit 2401 when the information is the operation information.

The remaining components illustrated in FIG. 26 are the same as those illustrated in FIG. 23.

Here, the example in which the screen information of the mobile phone terminal 20c is transferred to the in-vehicle display terminal 90a, the content is displayed on the screen of the in-vehicle display terminal 90a, and the in-vehicle display terminal 90a acquires the operation information of the user of the mobile phone terminal 20c or the information related to moving of the vehicle has been described. According to the present embodiment, compared to the sixth embodiment, it is possible to detect the driving state of the vehicle more accurately, it is possible to regulate the display of the web page of the browser while the vehicle is moving, and thus driving safety can be further increased.

In the above description, the number of web content simultaneously being operated on the browser is one, but a plurality of web content may be simultaneously operated, and web content being operated may be selected by the user selecting the tab and displayed. In this case, the browser may include a plurality of browser regulating units and a plurality of number of rendering units according to the number of web content being operated, and the browser control unit may be configured to manage the plurality of regulating units and the plurality of rendering units.

### REFERENCE SIGNS LIST

- 10: In-vehicle terminal
- 20: Mobile phone terminal
- 30: Vehicle
- 40: Global communication network
- 50: Web server
- 60: Restriction rule server
- 70: Base station
- 90: In-vehicle display terminal
- 200: CPU
- 201: ROM
- 202: RAM
- 203: Inter-device communication interface
- 204: Positioning sensor
- 205: Gyro sensor
- 206: Display device
- 207: Operating device
- 208: Auxiliary storage device
- 209: In-vehicle LAN interface
- 210: Camera
- 211: Radio tuner
- 212: Television tuner
- 213: Microphone
- 214: Speaker
- 220: Browser
- 221: Display managing unit
- 222: Navigation unit
- 223: Traffic information acquiring unit
- 224: Vehicle information acquiring unit
- 225: Driving state determining unit
- 226: Restriction rule managing unit
- 228: Sound reproducing unit
- 229: Moving image reproducing unit
- 230: Communication control unit
- 80: Wireless communication interface
- 240: Map DB
- 241: Traffic information data
- 242: Vehicle signal
- 243: In-vehicle network data
- 244: Restriction rule
- 245: Audio data
- 246: Moving image data
- 247: Display data
- 248: Analog audio signal
- 244: Communication data
- 300: Regulating unit
- 302: Browser cache
- 303: Rendering unit
- 304: Browser communication unit
- 305: Rendering IF
- 306: Restriction control unit
- 307: Restriction processing unit
- 308: Web content storage unit
- 310: Display switching information acquiring unit
- 312: Read request unit
- 350: Browser control unit
- 420: Browser
- 421: Display managing unit
- 422: In-vehicle terminal collaborating unit
- 423: Restriction rule managing unit
- 428: Sound reproducing unit
- 429: Moving image reproducing unit
- 430: Communication control unit
- 444: Restriction rule
- 445: Audio data
- 446: Moving image data
- 447: Display data
- 448: Analog audio signal
- 449: Communication data
- 450: Sensor data
- 451: Imaging data
- 452: In-vehicle terminal input-output data

## Claims

1. An information processing device, comprising:
a receiving unit that receives content;
an operation input unit that receives a user operation;
a vehicle information acquiring unit that acquires driving state information of a vehicle;
a display unit that is capable of displaying the received content; and
a control unit that controls the receiving unit, the operation input unit, the vehicle information acquiring unit, and the display unit,
wherein the control unit performs control such that display content of the content is changed and displayed on the display unit according to the driving state information when a user operation for switching information being displayed on the display unit to a browser or a user operation for switching a tab in the browser is input to the operation input unit.

2. The information processing device according to claim 1,
wherein the control unit performs control such that the display content of the content is switched when the driving state information is changed.

3. The information processing device according to claim 1,
wherein the content processed based on a predetermined restriction rule is displayed on the display unit according to the driving state information.

4. The information processing device according to claim 1, further comprising,
a recording unit that records the content processed based on a predetermined restriction rule,
wherein a control state of the control unit includes
a first state in which when the processed content is being recorded in the recording unit, the processed content recorded in the recording unit is displayed on the display unit according to the driving state information, and
a second state in which when the processed content is not being recorded in the recording unit, the received content is processed and recorded in the recording unit, and the processed content is displayed on the display unit according to the driving state information.

5. The information processing device according to claim 1, further comprising,
a recording unit that records non-processed content, wherein a control state of the control unit includes
a first state in which when the non-processed content is being recorded in the recording unit, the non-processed content recorded in the recording unit is displayed according to the driving state information, and
a second state in which when the non-processed content is not being recorded in the recording unit, the received content is not processed and is recorded in the recording unit, and the non-processed content is displayed on the display unit according to the driving state information.

6. The information processing device according to claim 4,
wherein the receiving unit receives the restriction rule, and
when a new restriction rule is received, the control unit deletes the processed content recorded in the recording unit, processes the received content based on the new restriction rule, and records the processed content in the recording unit.

7. The information processing device according to claim 1, further comprising,
an additional content queue that holds additional content related to the received content,
wherein the control unit causes the additional content to be held in the additional content queue while the vehicle is moving, and performs control such that information related to the additional content is reflected in content displayed on the display unit when the vehicle is not moving.

8. The information processing device according to claim 1,
wherein the information processing device is an in-vehicle terminal.

9. The information processing device according to claim 1,
wherein the information processing device is a mobile terminal.

10. The information processing device according to claim 1,
wherein the information processing device has a configuration in which a mobile terminal is connected with an in-vehicle display terminal.

11. An information processing method in an information processing device, comprising:
a receiving step of receiving content through a receiving unit;
an operation input step of receiving a user operation through an operation input unit;
a vehicle information acquiring step of acquiring driving state information of a vehicle through a vehicle information acquiring unit; and
a display step of being capable of displaying the received content through a display unit,
wherein display content of the content is changed and displayed according to the driving state information when a user operation for switching information being displayed on the display unit to a browser or a user operation for switching a tab in the browser is input.

12. The information processing method according to claim 11,
wherein the display content of the content is switched when the driving state information is changed.

13. The information processing method according to claim 11,
wherein the content processed based on a predetermined restriction rule is displayed on the display unit according to the driving state information.

14. The information processing method according to claim 11, further comprising,
a recording step of recording the content processed based on a predetermined restriction rule in a recording unit,
wherein when the processed content is being recorded in the recording unit, the processed content recorded in the recording unit is displayed on the display unit according to the driving state information, and
when the processed content is not being recorded in the recording unit, the received content is processed and recorded in the recording unit, and the processed content is displayed on the display unit according to the driving state information.

15. The information processing method according to claim 11, comprising,
a recording step of recording non-processed content in a recording unit,
wherein when the non-processed content is being recorded in the recording unit, the non-processed content recorded in the recording unit is displayed according to the driving state information, and
when the non-processed content is not being recorded in the recording unit, the received content is not processed and is recorded in the recording unit, and the non-processed content is displayed on the display unit according to the driving state information.
